(19) **Europäisches Patentamt**
**European Patent Office**
**Office européen des brevets**

(11) **EP 3 792 565 B1**

(12) **EUROPEAN PATENT SPECIFICATION**

(45) Date of publication and mention
of the grant of the patent:
**21.06.2023 Bulletin 2023/25**

(21) Application number: **20195097.9**

(22) Date of filing: **08.09.2020**

(51) International Patent Classification (IPC):
**F24F 11/65** (2018.01)   **F24F 12/00** (2006.01)
**F24F 11/81** (2018.01)   **F24F 11/84** (2018.01)
**F24F 11/46** (2018.01)   *F24F 110/12* (2018.01)
*F24F 110/22* (2018.01)   *F24F 11/00* (2018.01)

(52) Cooperative Patent Classification (CPC):
**F24F 11/65; F24F 11/46; F24F 11/81; F24F 11/84;**
**F24F 12/006;** F24F 2011/0006; F24F 2012/007;
F24F 2110/12; F24F 2110/22; Y02B 30/56

(54) **AIR CONDITIONING SYSTEM**

KLIMATISIERUNGSSYSTEM

SYSTÈME DE CLIMATISATION

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **12.09.2019 JP 2019166350**

(43) Date of publication of application:
**17.03.2021 Bulletin 2021/11**

(73) Proprietors:
• **DAIKIN INDUSTRIES, LTD.**
**Osaka-Shi, Osaka 530-0001 (JP)**
• **Daikin Europe N.V.**
**8400 Oostende (BE)**

(72) Inventors:
• **HIRAI, Kousuke**
**Osaka-shi, Osaka 530-8323 (JP)**
• **NAGAHARA, Keiya**
**Osaka-shi, Osaka 530-8323 (JP)**
• **VANOOTEGHEM, Jan**
**8400 Oostende (BE)**
• **STEEN, David**
**8400 Oostende (BE)**

(74) Representative: **Global IP Europe**
**Patentanwaltskanzlei**
**Pfarrstraße 14**
**80538 München (DE)**

(56) References cited:
**EP-A1- 3 093 568     US-A1- 2014 277 756**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to an air conditioning system including an air conditioner and a ventilator.

### BACKGROUND ART

Patent Literature 1 (JP 2006-308280 A) discloses an air conditioning system including a plurality of air conditioners (cooling-heating devices), a plurality of ventilators, and a central control device configured to control the air conditioners and the ventilators. The air conditioners each include an outdoor unit and a plurality of indoor units. The indoor units and the ventilators are installed in a plurality of spaces (rooms). The central control device operates the indoor unit and the ventilator in association with each other in each of the spaces. The central control device compares outdoor air temperature with set temperature therefor and indoor air temperature with set temperature therefor, and switches, in accordance with comparison results, strength of air blown from the indoor unit and the ventilator, or switches to operate or stop the indoor unit and the ventilator. In a case where the outdoor air temperature is lower than predetermined set temperature in summer, the central control device stops cooling operation by the indoor unit and operates only the ventilator for performing "outdoor air cooling operation" in which the room is cooled by introducing outdoor air into the room. As such outdoor air cooling operation reduces operation of the air conditioner, electric power consumption can be reduced.

EP 3 093 568 A1 discloses an air conditioning system configured to perform cooling operation in an air conditioning target space, the air conditioning system comprising: an air conditioner including a heat source unit and a plurality of utilization units constituting a single refrigerant circuit system; a ventilator; and a controller configured to control the air conditioner and the ventilator, wherein the plurality of utilization units is divided at least into a first utilization unit that is installed in a first air conditioning target space and belongs to a first group, and a second utilization unit that is installed in a second air conditioning target space and belongs to a second group, the first air conditioning target space and the second air conditioning target space each serving as the air conditioning target space, the ventilator is included in the first group and is configured to ventilate air for the first air conditioning target space, the first utilization unit includes a heat exchanger, the second utilization unit includes a heat exchanger, the first group includes a valve configured to adjust a flow rate of a refrigerant flowing to at least one heat exchanger of the first utilization unit, and the second group includes a valve configured to adjust a flow rate of a refrigerant flowing to at least one heat exchanger of the second utilization unit.

## SUMMARY OF THE INVENTION

### <Technical Problem>

In an air conditioning system including an air conditioner having an outdoor unit and a plurality of indoor units constituting a single refrigerant circuit system, and a plurality of ventilators, in a case when the plurality of indoor units and the plurality of ventilators are divided into groups to be installed, there is a possibility that the groups respectively have difference in set temperature for cooling operation each other. In this case, if outdoor air temperature is lower than the set temperature for one of the groups and higher than the set temperature for each of the remaining groups, the indoor unit can be stopped and outdoor air cooling operation only with the ventilator can be performed in the one of the groups, however the indoor units need cooling operation in each of the remaining groups.

When cooling operation of the indoor unit is stopped to perform the outdoor air cooling operation in the one of the groups, a compressor of the outdoor unit may be stopped. In this case, however, the indoor unit in any of the remaining groups cannot perform cooling operation and the corresponding spaces may have uncomfortable temperature.

It is an object of the present invention to provide an air conditioning system that enables, when a plurality of indoor units constituting a single refrigerant circuit system is divided into a plurality of groups, outdoor air cooling operation by a ventilator in a part of the groups to reduce electric power consumption.

### <Solutions to Problem>

(1) According to the invention, there is provided an air conditioning system as defined in claim 1. This air conditioning system includes, in particular, an air conditioner including a heat source unit and a plurality of utilization units constituting a single refrigerant circuit system, a ventilator, and a controller configured to control the air conditioner and the ventilator. The air conditioning system is configured to perform cooling operation in an air conditioning target space. The plurality of utilization units is divided at least into a first utilization unit belonging to a first group and a second utilization unit belonging to a second group. The ventilator is included in the first group. The first utilization unit includes a heat exchanger. The first group includes a valve configured to adjust a flow rate of a refrigerant flowing to the at least one heat exchanger of the first utilization unit. When, as to the first group, a predetermined outdoor air condition is satisfied for outdoor air, which is air outside the air conditioning target space, the controller closes the valve and causes the ventilator to perform outdoor air cooling operation in the first group. In this configuration, when the predetermined outdoor air condition is satisfied as to the first group, the utilization unit in the first group can be brought into a substantially stopped state without stopping the heat source unit, and the ventilator can perform outdoor air cooling operation. The air conditioning system can thus reduce total amount of refrigerant circulation and a load of a compressor to achieve reduction in electric power consumption.

(2) According to the invention, the second utilization unit includes a heat exchanger. The second group includes a valve configured to adjust a flow rate of a refrigerant flowing to the at least one heat exchanger of the second group. When the outdoor air condition is satisfied as to the first group, the controller keeps controlling an opening degree of the valve in the second group.

Such a configuration achieves cooling operation by the utilization unit in the second group to keep comfortable temperature, while performing the outdoor air cooling operation in the first group.

(3) Preferably, the ventilator is also included in the second group. When the outdoor air condition is satisfied as to the second group, the controller closes the valve and causes the ventilator to perform the outdoor air cooling operation in the second group.

Such a configuration achieves the outdoor air cooling operation also in the second group as in the first group, and the air conditioning system can thus reduce the total amount of the refrigerant circulation and the load of the compressor to achieve reduction in electric power consumption.

(4) Preferably, the air conditioning system further includes a temperature sensor configured to detect outdoor air temperature. The outdoor air condition is a condition that the outdoor air temperature detected by the temperature sensor is lower than a set temperature for indoor air, which is air in the air conditioning target space, by at least a first predetermined value. When a set temperature for indoor air in the first group is higher than a set temperature for indoor air in the second group, the outdoor air condition is satisfied as to the first group, and the outdoor air condition is not satisfied as to the second group, the controller closes the valve and causes the ventilator to perform the outdoor air cooling operation in the first group, and keeps controlling the opening degree of the valve in the second group.

The above configuration achieves appropriate cooling operation in each of the groups when the first and the second groups have difference in indoor air set temperature.

(5) Preferably, the air conditioning system further includes a temperature sensor configured to detect outdoor air temperature and a humidity sensor configured to detect outdoor air humidity. The outdoor air condition is a condition that an outdoor air enthalpy obtained from the outdoor air temperature detected by the temperature sensor and the outdoor air humidity detected by the humidity sensor is less than a target enthalpy for indoor air, which is air in the air conditioning target space, by at least a second predetermined value.

With such a configuration, the outdoor air cooling operation can be performed in consideration of outdoor air humidity as well as outdoor air temperature.

(6) Preferably, the outdoor air condition applied to the first group is different from the outdoor air condition applied to the second group.

With such a configuration, the outdoor air condition can be set appropriately in accordance with a state in each of the groups, such as configurations of the utilization unit and the ventilator, frequency of room use, the number of persons, or a thermal load.

(7) Preferably, the air conditioning system further includes a temperature sensor configured to detect outdoor air temperature and a humidity sensor configured to detect outdoor air humidity in the first group. The outdoor air condition applied to the first group is a condition that an outdoor air enthalpy obtained from the outdoor air temperature detected by the temperature sensor and the outdoor air humidity detected by the humidity sensor is less than a target enthalpy for indoor air, which is air in the air conditioning target space, by at least a second predetermined value. The outdoor air condition applied to the second group is a condition that the outdoor air temperature detected by the temperature sensor is lower than a set temperature for indoor air by at least a first predetermined value.

Such a configuration enables the outdoor air cooling operation under an appropriate outdoor air condition in accordance with whether or not each of the groups is provided with an outdoor air humidity sensor.

(8) Preferably, a setting of the first predetermined value is changeable.

Such a configuration enables adjustment of a condition for the outdoor air cooling operation.

(9) Preferably, a setting of the second predetermined value is changeable.

Such a configuration enables adjustment of a condition for the outdoor air cooling operation.

(10) Preferably, the air conditioning system further includes a temperature sensor configured to detect outdoor air temperature. The controller is configured to determine whether or not the air conditioning system includes a humidity sensor configured to detect outdoor air humidity. When the controller determines that the humidity sensor is not included, the outdoor air condition is set to a condition that the outdoor air temperature detected by the temperature sensor is lower than a set temperature for indoor air, which is air in the air conditioning target space, by at least a first predetermined value. When the controller determines that the humidity sensor is included, the outdoor air condition is set to a condition that an outdoor air enthalpy obtained from the outdoor air temperature detected by the temperature sensor and the outdoor air humidity detected by the humidity sensor is less than a target enthalpy for indoor air by at least a second predetermined value.

Such a configuration enables setting of a more appropriate outdoor air condition in accordance with whether or not the outdoor air humidity sensor is provided.

(11) Preferably, the ventilator includes the temperature sensor.

Such a configuration has less influence of ambient heat on the temperature sensor to achieve precise detection of outdoor air temperature, for example, in comparison to a case where the temperature sensor is provided at the heat source unit.

(12) Preferably, when temperature of indoor air, which is air in the air conditioning target space, exceeds a temperature lower than a set temperature for indoor air by a third predetermined value or when outdoor air temperature exceeds a temperature lower than the set temperature for indoor air by a fourth predetermined value during the outdoor air cooling operation, the controller opens the valve being closed and controls an opening degree of the valve. In such a configuration, the outdoor air cooling operation can be stopped and the utilization unit can restart cooling operation when it is difficult to continue the outdoor air cooling operation.

(13) Preferably, a setting of the third predetermined value or a setting of the fourth predetermined value is changeable.

Such a configuration achieves adjustment of a condition for stopping the outdoor air cooling operation.

(14) Preferably, the air conditioning system further includes remote controllers configured to remotely control the utilization units and/or the ventilator. The utilization units and the ventilator are grouped in accordance with communicable connection to the identical remote controller.

(15) Preferably, the utilization units and the ventilator are grouped in accordance with identification codes assigned to the utilization units and the ventilator.

## BRIEF DESCRIPTION OF THE DRAWINGS

FIG. 1 is an explanatory configuration diagram of an air conditioning system according to an embodiment of the present invention;
FIG. 2 is an explanatory view of a refrigerant pipe system of an air conditioner in the air conditioning system;
FIG. 3 is an explanatory plan view of a ventilator;
FIG. 4A is an explanatory view of the ventilator along arrow A-A indicated in FIG. 3;

FIG. 4B is an explanatory view of the ventilator along arrow B-B indicated in FIG. 3;
FIG. 5 is an explanatory plan view of the ventilator in a case where a bypass air flow path is in use;
FIG. 6 is a flowchart depicting a first procedure in order to start outdoor air cooling operation;
FIG. 7 is a flowchart depicting a second procedure in order to start outdoor air cooling operation;
FIG. 8 is a flowchart depicting a third procedure in order to stop outdoor air cooling operation;
FIG. 9 is a flowchart depicting a fourth procedure in order to stop outdoor air cooling operation; and
FIG. 10 is an explanatory configuration diagram of an air conditioning system according to another embodiment of the present invention.

## DESCRIPTION OF EMBODIMENTS

An air conditioning system according to the present invention will be described in detail hereinafter with reference to the accompanying drawings. The present invention is not limited to the following exemplification, but is defined by the claims.

<Entire configuration of air conditioning system>

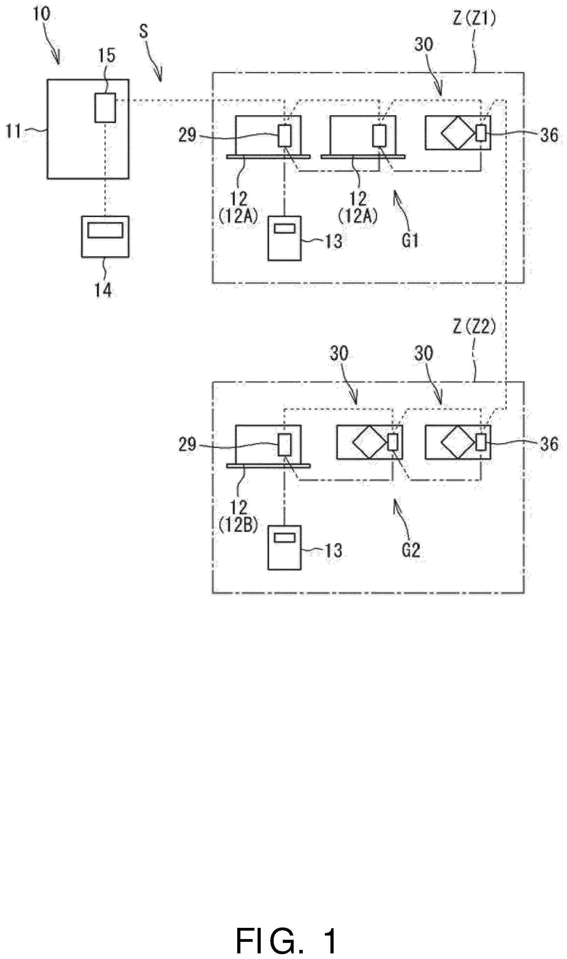

FIG. 1 is an explanatory configuration diagram of an air conditioning system according to an embodiment of the present invention.

An air conditioning system S includes an air conditioner 10 and a ventilator 30. The air conditioner 10 is configured to perform vapor-compression refrigeration cycle operation to cool or heat an air conditioning target space Z. The air conditioner 10 includes a heat source unit (outdoor unit) 11 and utilization units (indoor units) 12. A plurality of utilization units 12 is connected to the single heat source unit 11.

The ventilator 30 ventilates by introducing air outside the air conditioning target space Z into the air conditioning target space Z and exhausting air in the air conditioning target space Z to outside the air conditioning target space Z. The present specification may refer to air outside the air conditioning target space Z as "outdoor air", and may refer to air in the air conditioning target space Z as "indoor air".

The air conditioning system S according to the present embodiment includes a plurality of ventilators 30.

The ventilators 30 according to the present embodiment are of a total heat exchange type configured to totally exchange heat (exchange sensible heat and latent heat) between outdoor air introduced into the air conditioning target space Z and indoor air exhausted from the air conditioning target space Z. The ventilators 30 should not be limited to the total heat exchange type, and may alternatively be of any other type. Examples of the ventilators 30 include a conventionally known ventilator such as a ventilator of a desiccant type configured to achieve simultaneous ventilation and humidity adjustment in the air conditioning target space Z with use of a heat exchanger provided with an adsorbent that adsorbs moisture contained in air (see, for example, JP 2009-109090 A).

The ventilators 30 according to the present embodiment also perform "outdoor air cooling operation" of cooling by introducing, into the air conditioning target space Z, outdoor air having temperature or an enthalpy less than that of indoor air.

The plurality of utilization units 12 and the plurality of ventilators 30 are grouped to be installed in a plurality of air conditioned zones Z1 and Z2 each serving as the air conditioning target space Z. The air conditioned zones Z1 and Z2 each corresponds to a single region or space to be air conditioned by the air conditioner 10 and the ventilator 30. For example, each of the air conditioned zones Z1 and Z2 is a closed space spatially partitioned with a wall, a partition, or the like. However, the air conditioned zones Z1 and Z2 should not be limited to such a closed space. The air conditioned zones Z1 and Z2 to be provided with the air conditioning system S according to the present embodiment can be appropriately set in an office, a hotel, a theater, a store, or the like in a building in which at least one of cooling operation and heating operation is performed along with ventilation. The heat source unit 11 in the air conditioner 10 is installed outside the air conditioned zones Z1 and Z2.

The present embodiment exemplifies installation of the utilization unit 12 and the ventilator 30 in each of the two air conditioned zones Z1 and Z2. The air conditioned zones Z1 and Z2 may alternatively include three or more air conditioned zones. The air conditioned zones Z1 and Z2 are each provided with at least one utilization unit 12 and at least one ventilator 30. The present embodiment exemplifies the first air conditioned zone Z1 provided with two utilization units 12 and one ventilator 30. The second air conditioned zone Z2 is provided with one utilization unit 12 and two ventilators 30. The number of the utilization units 12 and the number of the ventilators 30 may be appropriately changed in each of the air conditioned zones Z1 and Z2. In the present embodiment, the utilization units 12 installed in the first air conditioned zone Z1 may also be referred to as first utilization units 12A, and the utilization unit 12 installed in the second air conditioned zone Z2 may also be referred to as a second utilization unit 12B.

The utilization unit(s) 12 and the ventilator(s) 30 installed in each of the air conditioned zones Z1 and Z2 constitute one group. In other words, the utilization unit(s) 12 and the ventilator(s) 30 belonging to an identical group are installed in the single air conditioned zone Z1 or Z2. The first utilization units 12A and the ventilator 30 installed in the first air conditioned zone Z1 constitute the group also called a first group G1 in the present embodiment. The second utilization unit 12B and the ventilators 30 installed in the second air conditioned zone Z2 constitute the group also called a second group G2.

The groups G1 and G2 each exemplify a combination of the utilization unit(s) 12 and the ventilator(s) 30 communicably connected to an identical remote controller 13. Each of the groups G1 and G2 alternatively exemplifies a combination of the utilization unit(s) 12 and the ventilator(s) 30 set by a centralized controller 14. The centralized controller 14 is communicably connected to the air conditioner 10 and the ventilators 30, and is configured to centrally control the air conditioning system S. The centralized controller 14 is configured to provide each of the utilization unit(s) 12 and each of the ventilator(s) 30 with an identification code and assign each of the identification codes to either one of the groups G1 and G2 for grouping.

< Specific configuration of air conditioner>

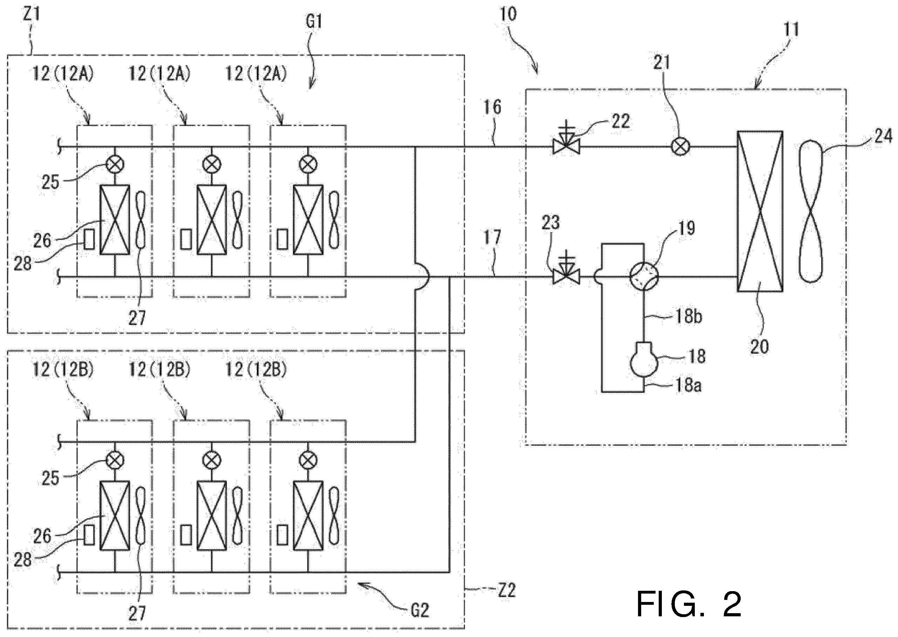

FIG. 2 is an explanatory view of a refrigerant pipe system of the air conditioner in the air conditioning system.

The heat source unit 11 and the utilization units 12 in the air conditioner 10 constitute a single refrigerant circuit system. The heat source unit 11 and the utilization units 12 are connected via a liquid refrigerant connection pipe 16 and a gas refrigerant connection pipe 17. Each of the utilization units 12 can be installed on a floor, adjacent to a ceiling, behind the ceiling, or the like in the corresponding air conditioned zone Z1 or Z2.

(Heat source unit)

The heat source unit 11 includes a compressor 18, a four-way switching valve 19, a heat source heat exchanger 20, a heat source expansion valve 21, a liquid-side shutoff valve 22, and a gas-side shutoff valve 23.

The compressor 18 is of a hermetic type and driven by a motor (not depicted), and sucks a gas refrigerant from a suction flow path 18a.

The four-way switching valve 19 is a mechanism configured to switch a refrigerant flow direction.

As indicated by solid lines in FIG. 2, during cooling operation, the four-way switching valve 19 connects a refrigerant pipe 18b disposed on a discharge side of the compressor 18 and a first end of the heat source heat exchanger 20, and connects the suction flow path 18a on a suction side of the compressor 18 and the gas-side shutoff valve 23. In this configuration, the heat source heat exchanger 20 functions as a condenser for a refrigerant compressed by the compressor 18, and utilization heat exchangers 26 to be described later function as evaporators for a refrigerant condensed by the heat source heat exchanger 20.

As indicated by broken lines in FIG. 2, during heating operation, the four-way switching valve 19 connects the refrigerant pipe 18b on the discharge side of the compressor 18 and the gas-side shutoff valve 23, and connects suction flow path 18a and the first end of the heat source heat exchanger 20. In this configuration, the utilization heat exchangers 26 function as a condenser for the refrigerant compressed by the compressor 18, and the heat source heat exchanger 20 functions as an evaporator for a refrigerant cooled by the utilization heat exchangers 26.

The heat source unit 11 includes a heat source fan 24. The heat source fan 24 takes in outdoor air into the heat source unit 11 for heat exchange between the outdoor air and the refrigerant flowing in the heat source heat exchanger 20.

The heat source unit 11 includes a control unit 15 (see FIG. 1) configured to control operation of the compressor 18, the four-way switching valve 19, the heat source expansion valve 21, and the heat source fan 24. The control unit 15 includes an arithmetic logic unit like a CPU, a memory like a RAM and a ROM, a communication interface, and the like.

(Utilization unit)

The plurality of utilization units 12 is connected to the heat source unit 11 via the refrigerant connection pipes 16 and 17. The utilization units 12 each include a utilization expansion valve 25, the utilization heat exchanger 26, and a utilization fan 27.

The utilization expansion valve 25 is constituted by a motor value. The utilization expansion valve 25 adjusts a flow rate of a refrigerant flowing in the utilization heat exchanger 26. Adjustment to desired air conditioning capacity of the utilization heat exchanger 26 can be achieved by adjusting the flow rate of the refrigerant flowing in the utilization heat exchanger 26. The utilization expansion valve 25 can be closed to stop a flow of a refrigerant to the utilization heat exchanger 26.

The utilization fan 27 sucks air in the air conditioned zone Z1 or Z2 into the utilization unit 12, and supplies air having undergone heat exchange with the refrigerant flowing in the utilization heat exchanger 26 into the air conditioned zone Z1 or Z2. Each of the utilization units 12 adjusts temperature in the air conditioned zone Z1 or Z2 to a desired set value.

The utilization units 12 according to the present embodiment each include a refrigerant sensor 28 configured to detect a refrigerant leaking from the utilization heat exchanger 26, the refrigerant pipe, or the like. The refrigerant sensor 28 is installed at a point enabling detection of refrigerant leakage. The refrigerant sensor 28 is disposed adjacent to a point likely to have refrigerant leakage, such as a joint portion between refrigerant pipes, a curved portion, at 90 or more degrees, of the refrigerant pipes, or a portion having small pipe thickness.

The refrigerant sensor 28 can alternatively be mounted at an appropriate point other than the interior of the utilization unit 12, such as at the remote controller 13, which is to be described later, configured to set indoor air temperature, airflow volume, and the like, or on a wall surface of the air conditioned zone Z1 or Z2. When the refrigerant sensor 28 detects a leaking refrigerant, the utilization unit 12 may be stopped and the ventilator(s) 30 may operate to exhaust the leaking refrigerant to outside the air conditioned zone Z1 or Z2.

As depicted in FIG. 1, the utilization units 12 each include a control unit 29 and the remote controller 13. The control unit 29 controls operation of the utilization expansion valve 25, the utilization fan 27, and the like. The control unit 29 receives a detection signal from the refrigerant sensor 28. The control unit 29 includes an arithmetic logic unit like a CPU, a memory like a RAM and a ROM, a communication interface, and the like. The control unit 29 in each of the utilization units 12 is communicably connected to the control unit 15 in the heat source unit 11 and a control unit 36, which is to be described later, included in each of the ventilators 30.

The remote controller 13 is manipulated to start or stop operation and to set temperature, strength of blown air, and the like in the air conditioned zone Z1 or Z2. The remote controller 13 includes an arithmetic logic unit like a CPU, a memory like a RAM and a ROM, a communication interface, and the like. The remote controller 13 is wiredly or wirelessly connected to the control unit 29 in the utilization unit 12 so as to achieve communication. A user manipulates the remote controller 13 to remotely operate the air conditioner 10.

The memory in the remote controller 13 stores indoor air set temperature (target temperature) set by the user. The memory in the remote controller 13 preliminarily stores the indoor air set humidity (target humidity), in association with the indoor air set temperature. The indoor air set temperature can be set individually with use of the remote controller 13 in each of the air conditioned zones Z1 and Z2. The air conditioned zones Z1 and Z2 may thus have difference in indoor air set temperature.

The indoor air set temperature and the indoor air set humidity may alternatively be stored in the memory in the control unit 29 of the utilization unit 12 or the control unit 15 of the heat source unit 11, or a memory included in the control unit 36 in the ventilator 30 to be described later.

The remote controller 13 is communicably connected also to the control unit 36 in the ventilator 30. The remote controller 13 is manipulated to start or stop the ventilator 30 and to set operation like strength of blown air.

<Specific configurations of ventilator>

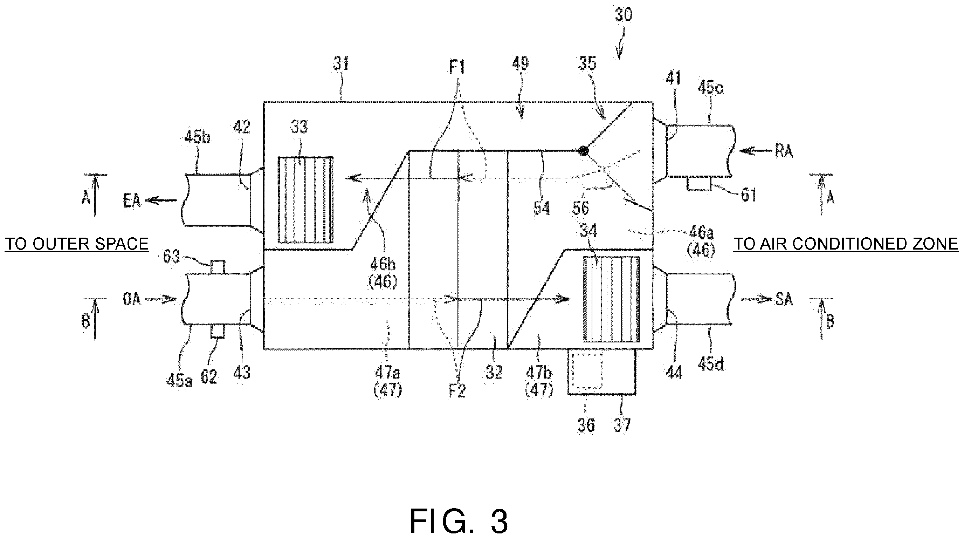

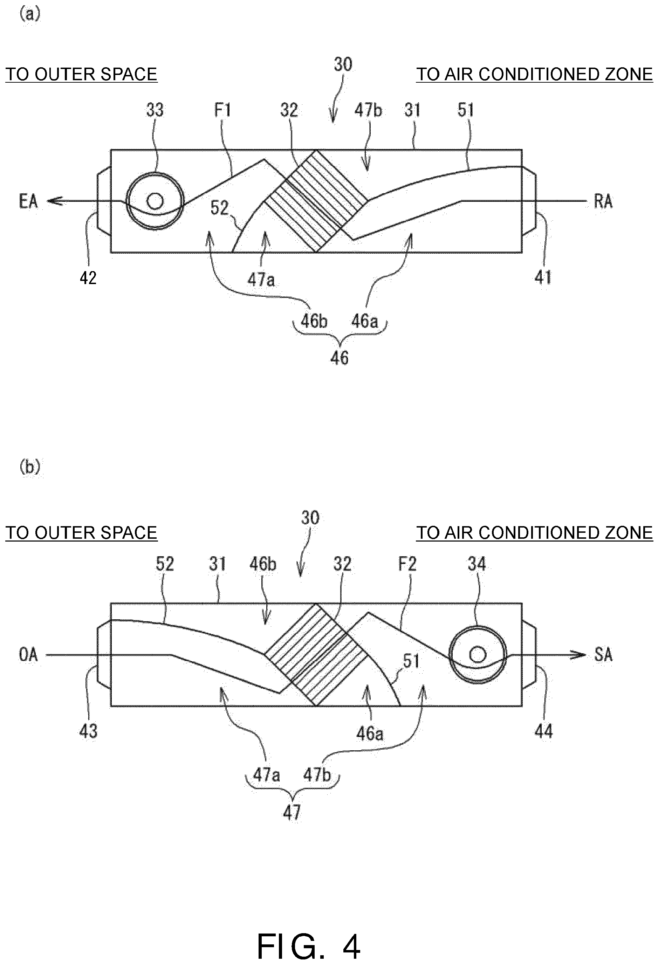

FIG. 3 is an explanatory plan view of the ventilator. FIG. 4A is an explanatory view of the ventilator along arrows A-A indicated in FIG. 3. FIG. 4B is an explanatory view of the ventilator along arrows B-B indicated in FIG. 3. The ventilator 30 is configured to ventilate the corresponding air conditioned zone Z1 or Z2 (see FIG. 1). The ventilator 30 may be disposed behind the ceiling in the air conditioned zone Z1 or Z2. The ventilator 30 ventilates solely or in association with the air conditioner 10. The ventilator 30 is connected to spaces outside and inside the air conditioned zone Z1 or Z2 via ducts 45a to 45d.

The ventilator 30 includes a casing 31 having a substantially rectangular parallelepiped box shape. The casing 31 accommodates a total heat exchanger 32, an exhaust fan 33, an air supply fan 34, an opening-closing mechanism 35, and the control unit 36. The casing 31 is provided with a return air intake port 41, an exhaust air blow-out port 42, an outdoor air intake port 43, and a supplied air blow-out port 44. As depicted in FIG. 3, the outdoor air intake port 43 and the exhaust air blow-out port 42 communicate with an outer space via the ducts 45a and 45b, respectively. The return air intake port 41 and the supplied air blow-out port 44 communicate with the air conditioned zone Z1 or Z2 via the ducts 45c and 45d, respectively.

The return air intake port 41 is provided to take in air (return air) RA in the air conditioned zone Z1 or Z2 into the casing 31. The exhaust air blow-out port 42 is provided to exhaust, as exhaust air EA, the return air RA taken into the casing 31, to the space outside the air conditioned zone Z1 or Z2 (hereinafter, also referred to as the "outer space"). The outdoor air intake port 43 is provided to take in air (outdoor air) OA in the outer space into the casing 31. The supplied air blow-out port 44 is provided to supply, as supplied air SA, the outdoor air OA taken into the casing 31, into the air conditioned zone Z1 or Z2.

As depicted in FIG. 3, in the casing 31, the return air RA taken into the casing 31 through the return air intake port 41 passes through the total heat exchanger 32 and is exhausted, as the exhaust air EA, to the outer space through the exhaust air blow-out port 42. Such an air flow will also be referred to as a "first air flow F1".

The outdoor air OA taken into the casing 31 through the outdoor air intake port 43 passes through the total heat exchanger 32 and is supplied, as the supplied air SA, into the air conditioned zone Z1 or Z2 through the supplied air blow-out port 44. Such an air flow will also be referred to as a "second air flow F2".

The total heat exchanger 32 is of a perpendicular type configured to have the first air flow F1 and the second air flow F2 flowing substantially perpendicularly to each other. The total heat exchanger 32 is configured to exchange sensible heat and latent heat (perform total heat exchange) between the first air flow F1 and the second air flow F2.

As depicted in FIG. 4, the casing 31 has an internal space sectioned by the total heat exchanger 32 into two regions, namely, a region adjacent to the air conditioned zone Z1 or Z2 and a region adjacent to the outer space. The casing 31 is provided therein with an upstream exhaust air flow path 46a disposed upstream of the total heat exchanger 32 on the first air flow F1, and a downstream exhaust air flow path 46b disposed downstream of the total heat exchanger 32 on the first air flow F1. The upstream exhaust air flow path 46a and the downstream exhaust air flow path 46b constitute an exhaust air flow path 46 connecting the air conditioned zone Z1 or Z2 and the outer space via the total heat exchanger 32.

The casing 31 is provided therein with an upstream supplied air flow path 47a disposed upstream of the total heat exchanger 32 on the second air flow F2, and a downstream supplied air flow path 47b disposed downstream of the total heat exchanger 32 on the second air flow F2. The upstream supplied air flow path 47a and the downstream supplied air flow path 47b constitute a supplied air flow path 47 connecting the air conditioned zone Z1 or Z2 and the outer space via the total heat exchanger 32.

The upstream exhaust air flow path 46a and the downstream supplied air flow path 47b interpose a sectioning wall 51. The downstream exhaust air flow path 46b and the upstream supplied air flow path 47a interpose a sectioning wall 52.

As depicted in FIG. 3 and FIG. 4A, the downstream exhaust air flow path 46b is provided, adjacent to the exhaust air blow-out port 42, with the exhaust fan 33. The exhaust fan 33 is driven to generate the first air flow F1, and the return air RA from the air conditioned zone Z1 or Z2 passes through the exhaust air flow path 46 to be exhausted as the exhaust air EA to the outer space.

As depicted in FIG. 3 and FIG. 4B, the downstream supplied air flow path 47b is provided, adjacent to the supplied air blow-out port 44, with the air supply fan 34. The air supply fan 34 is driven to generate the second air flow F2, and the outdoor air OA in the outer space passes through the supplied air flow path 47 to be supplied into the air conditioned zone Z1 or Z2 as the supplied air SA.

As depicted in FIG. 3, a bypass air flow path 49 and the opening-closing mechanism 35 are provided in the casing 31 according to the present embodiment. The bypass air flow path 49 is formed between the return air intake port 41 and the exhaust air blow-out port 42 to connect the return air intake port 41 and the exhaust air blow-out port 42. The bypass air flow path 49 is separated from the upstream exhaust air flow path 46a and the total heat exchanger 32 by a partition wall 54. The bypass air flow path 49 has a downstream end joining the downstream exhaust air flow path 46b. Accordingly, the bypass air flow path 49 communicates between the air conditioned zone Z1 or Z2 and the outer space without passing through the total heat exchanger 32.

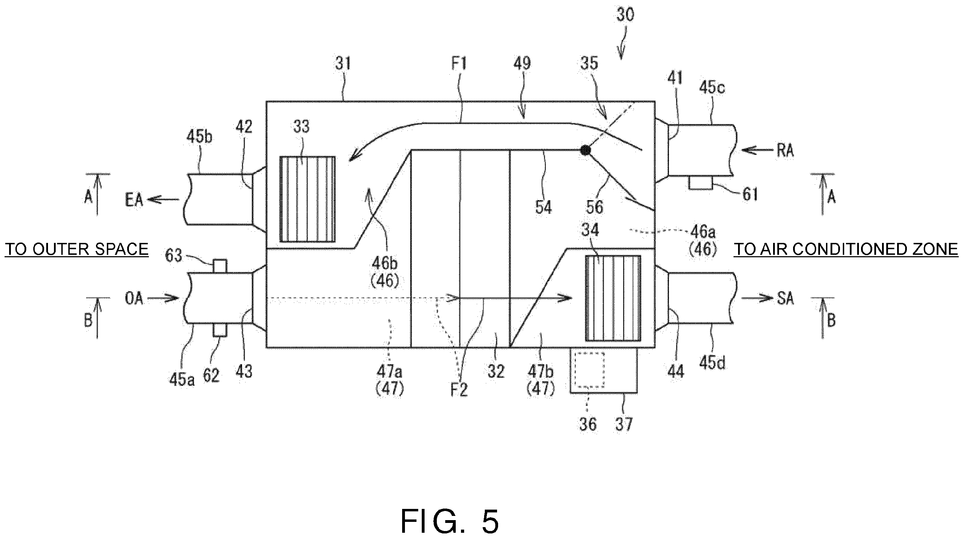

The opening-closing mechanism 35 includes a damper (exhaust air opening-closing mechanism) 56 configured to open or close for switching between the exhaust air flow path 46 and the bypass air flow path 49. The damper 56 may be swingably attached to the partition wall 54. The exhaust air damper 56 switches between a first state of opening the exhaust air flow path 46 to communicate with the return air intake port 41 and closing the bypass air flow path 49 so as not to communicate with the return air intake port 41 as depicted in FIG. 3, and a second state of opening the bypass air flow path 49 to communicate with the return air intake port 41 and closing the exhaust air flow path 46 so as not to communicate with the return air intake port 41 as depicted in FIG. 5.

When performing a normal ventilation, the ventilator 30 according to the present embodiment switches the damper 56 into the first state, and ventilates while the total heat exchanger 32 is exchanging sensible heat and latent heat.

When performing the "outdoor air cooling operation" to be described later, the ventilator 30 according to the present embodiment switches the damper 56 into the second state. In the second state, the ventilator 30 supplies, as the supplied air SA, the outdoor air OA taken into the casing 31 via the outdoor air intake port 43, into a room through the total heat exchanger 32 from the supplied air blow-out port 44. In the second state, the ventilator 30 exhausts the return air RA, which is taken into the casing 31 from the air conditioned zone Z1 or Z2 via the return air intake port 41, through the bypass air flow path 49 to the outer space from the exhaust air blow-out port 42. Accordingly, total heat exchange, between the second air flow F2 from the outdoor air intake port 43 through the supplied air flow path 47 and the first air flow F1 from the return air intake port 41 through the bypass air flow path 49, does not occur, and outdoor air is introduced into the air conditioned zone Z1 or Z2 without total heat exchange to cool the air conditioned zone Z1 or Z2.

As depicted in FIG. 3, the ventilator 30 includes an indoor air temperature sensor 61 configured to detect temperature in the air conditioned zone Z1 or Z2, an outdoor air temperature sensor 62 configured to detect temperature in the outer space, and an outdoor air humidity sensor 63 configured to detect humidity in the outer space. The indoor air temperature sensor 61 is attached at the return air intake port 41 or the duct 45c, and detects temperature of air taken into the casing 31 by the exhaust fan 33.

The outdoor air temperature sensor 62 and the outdoor air humidity sensor 63 are attached at the outdoor air intake port 43 or the duct 45a, and detect temperature and humidity of outdoor air taken into the casing 31 by the air supply fan 34.

The ventilator 30 includes the control unit 36. The control unit 36 includes an arithmetic logic unit like a CPU, a memory like a RAM and a ROM, a communication interface, and the like. The control unit 36 controls operation of the exhaust fan 33, the air supply fan 34, the opening-closing mechanism 35, and the like in the ventilator 30. The control unit 36 receives detection signals from the indoor air temperature sensor 61, the outdoor air temperature sensor 62, and the outdoor air humidity sensor 63. The control unit 36 determines whether or not to perform "outdoor air cooling operation" in accordance with the detection signals from the sensors 61, 62, and 63.

<About outdoor air cooling operation>

The expression "outdoor air cooling operation" indicates cooling operation in which outdoor air is taken into the air conditioned zone Z1 or Z2 by the ventilator 30, without cooling operation (hereinafter, also called "normal cooling operation") by the air conditioner 10. Such outdoor air cooling operation leads to reduce refrigerant circulation in the air conditioner 10 and reduce load of the compressor 18, to achieve reduction in electric power consumption. Such outdoor air cooling operation starts when outdoor air satisfies a predetermined condition (hereinafter, also called an "outdoor air condition").

(Processing of starting outdoor air cooling operation)

The control unit 36 in the ventilator 30 determines whether or not to start outdoor air cooling operation in accordance with a first procedure or a second procedure to be described below. The control units 36 in the ventilators 30 installed in the air conditioned zones Z1 and Z2 respectively independently execute the first procedure or the second procedure. When the air conditioned zone Z1 or Z2 is provided with a plurality of ventilators 30, the control unit 36 in at least one of the ventilators 30 executes the first procedure or the second procedure.

(First procedure)

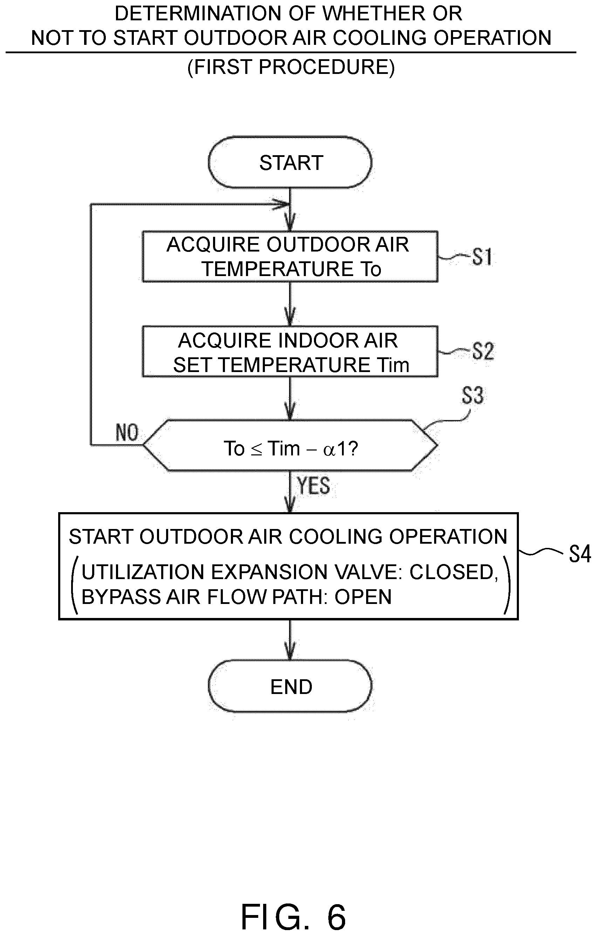

FIG. 6 is a flowchart depicting the first procedure in order to start the outdoor air cooling operation. The first procedure is executed in a state where the air conditioner 10 performs the normal cooling operation and the ventilator 30 ventilates in the air conditioned zone Z1 or Z2.

In step S1, the control unit 36 acquires outdoor air temperature from the outdoor air temperature sensor 62.

In step S2, the control unit 36 acquires the indoor air set temperature (target temperature) stored in the memory of the remote controller 13.

Subsequently, in step S3, the control unit 36 determines whether or not outdoor air temperature To and indoor air set temperature Tim satisfy a condition according to a formula (1).

$$To \leq Tim - \alpha1 \ ... \quad (1)$$

The formula (1) includes a constant $\alpha1$ specifying a difference between the outdoor air temperature To and the set temperature Tim, and being necessary for the outdoor air cooling operation. Setting of the constant $\alpha1$ is changeable by the user with use of the remote controller 13 or the like, in accordance with an environment in the air conditioned zone Z1 or Z2, an installation state of the ventilator(s) 30, or the like.

When the outdoor air temperature To is lower than the set temperature Tim by at least the predetermined value $\alpha 1$, it is possible to decrease the indoor air temperature by taking outdoor air into the air conditioned zone Z1 or Z2. When the condition according to the formula (1) is satisfied, the control unit 36 thus starts the outdoor air cooling operation in the following manner (step S4).

Specifically, the control unit 36 transmits, to the remote controller 13, "start information" indicating start of the outdoor air cooling operation. In accordance with the start information, the remote controller 13 transmits, to the control unit 29 in the utilization unit 12, a command to stop the "normal cooling operation". The control unit 29 closes the utilization expansion valve 25 to stop supply of the refrigerant to the utilization heat exchanger 26 so as to stop the normal cooling operation. The compressor 18 in the heat source unit 11 continuously operates in this state. The normal cooling operation thus continues in the air conditioned zone not having started the outdoor air cooling operation.

Further, as depicted in FIG. 5, the control unit 36 in the ventilator 30 controls the exhaust air damper 56 in the opening-closing mechanism 35 to exhaust the return air RA taken into the casing 31 via the return air intake port 41, through the bypass air flow path 49 without passing through the total heat exchanger 32, to the outer space from the exhaust air blow-out port 42. The outdoor air OA taken into the casing 31 via the outdoor air intake port 43 passes through the total heat exchanger 32 and is supplied into the room from the supplied air blow-out port 44 as the supplied air SA.

The outdoor air can thus be introduced into the air conditioned zone Z1 or Z2 without total heat exchange with indoor air to perform the outdoor air cooling operation.

When the condition according to the formula (1) is not satisfied in step S3, the control unit 36 returns the flow to step S1 and repeats processing in steps S1 to S3.

Assume that the outdoor air cooling operation starts when To ≤ Tim is established in the formula (1). In this case, the outdoor air temperature To is not enough lower than the set temperature Tim, and introduction of outdoor air may thus not lead to temperature decrease to the set temperature in the air conditioned zone Z1 or Z2. Accordingly, in the first procedure, the outdoor air cooling operation is started when the outdoor air temperature To reaches or becomes less than a temperature lower than the indoor air set temperature Tim by the predetermined value $\alpha 1$. As a result, the temperature in the air conditioned zone Z1 or Z2 can be reduced to the set temperature.

(Second procedure)

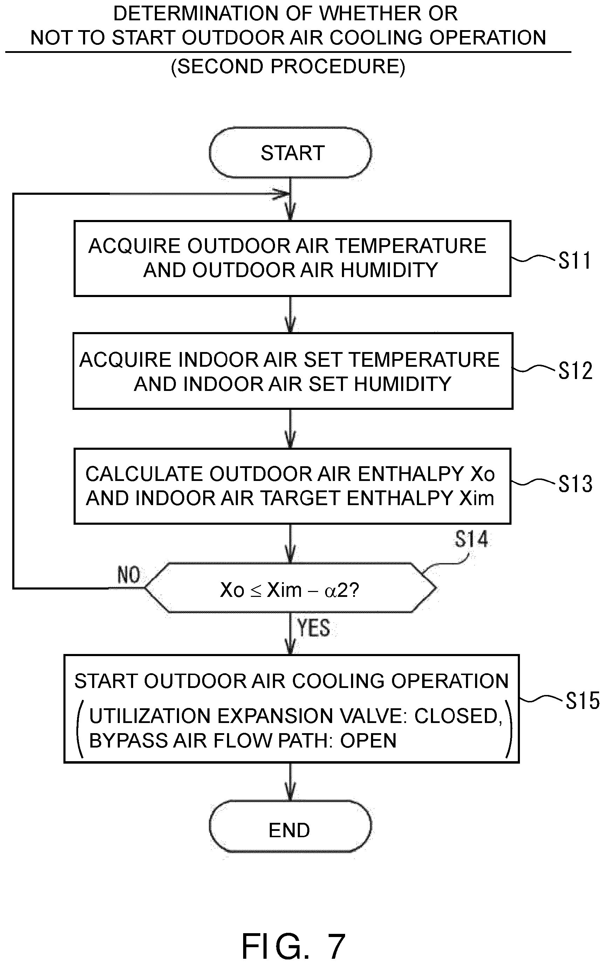

FIG. 7 is a flowchart depicting the second procedure in order to start the outdoor air cooling operation. The second procedure is executed in a state where the air conditioner 10 performs the normal cooling operation and the ventilator 30 ventilates in the air conditioned zone Z1 or Z2.

In step S11, the control unit 36 acquires outdoor air temperature and outdoor air humidity detected by the outdoor air temperature sensor 62 and the outdoor air humidity sensor 63.

In step S12, the control unit 36 acquires the indoor air set temperature and the indoor air set humidity stored in the memory of the remote controller 13.

Subsequently in step S13, the control unit 36 obtains an outdoor air enthalpy Xo from the outdoor air temperature and the outdoor air humidity, and obtains an indoor air target enthalpy Xim from the indoor air set temperature and the indoor air set humidity.

In step S14, the control unit 36 determines whether or not the outdoor air enthalpy Xo and the target enthalpy Xim satisfy a condition according to a formula (2).

$$Xo \leq Xim - \alpha 2 \ldots \quad (2)$$

The formula (2) includes a constant $\alpha 2$ specifying a difference between the outdoor air enthalpy Xo and the target enthalpy Xim, and being necessary for the outdoor air cooling operation. Setting of the constant $\alpha 2$ is changeable by the user with use of the remote controller 13 or the like, in accordance with the environment in the air conditioned zone Z1 or Z2, the installation state of the ventilator(s) 30, or the like.

When the outdoor air enthalpy Xo is less than the indoor air target enthalpy Xim by at least the predetermined value $\alpha 2$, it is possible to decrease the indoor air enthalpy and thereby to decrease the indoor air temperature and the indoor air humidity by taking outdoor air into the air conditioned zone Z1 or Z2. When the condition according to the formula (2) is satisfied, the control unit 36 thus starts the outdoor air cooling operation in step S15.

Specifically, the control unit 36 transmits, to the remote controller 13, "start information" indicating start of the outdoor air cooling operation. In accordance with the start information, the remote controller 13 transmits, to the control unit 29 in the utilization unit 12, a command to stop the "normal cooling operation". The control unit 29 closes the utilization expansion valve 25 to stop supply of the refrigerant to the utilization heat exchanger 26 so as to stop the normal cooling operation.

Further, as depicted in FIG. 5, the control unit 36 in the ventilator 30 controls the exhaust air damper 56 in the opening-closing mechanism 35 to exhaust the return air RA taken into the casing 31 via the return air intake port 41, through the bypass air flow path 49 without passing through the total heat exchanger 32, to the outer space from the exhaust air blow-out port 42. The outdoor air OA taken into the casing 31 via the outdoor air intake port 43 passes through the total heat exchanger 32 and is supplied into the room from the supplied air blow-out port 44 as the supplied air SA.

The outdoor air can thus be introduced into the air conditioned zone Z1 or Z2 without total heat exchange with indoor air to perform the outdoor air cooling operation.

When the condition according to the formula (2) is not satisfied in step S14, the control unit 36 returns the flow to step S11 and repeats processing in steps S11 to S14.

Assume that the outdoor air cooling operation starts when $Xo \leq Xim$ is established in the formula (2). In this case, the outdoor air enthalpy Xo is not enough less than the target enthalpy Xim, and introduction of outdoor air may thus not lead to temperature decrease to the set value in the air conditioned zone Z1 or Z2. Accordingly, in the second procedure, the outdoor air cooling operation is started when the outdoor air enthalpy Xo reaches a value less than the indoor air target enthalpy Xim by the predetermined value $\alpha 2$. As a result, the temperature in the air conditioned zone Z1 or Z2 can be reduced to the set temperature.

(Method of selecting first procedure or second procedure)

The first procedure is executed with use of the outdoor air temperature sensor 62. In contrast, the second procedure is executed with use of the outdoor air temperature sensor 62 and the outdoor air humidity sensor 63. When the ventilator 30 includes both the outdoor air temperature sensor 62 and the outdoor air humidity sensor 63, either the first procedure or the second procedure can be selected to be executed. When the ventilator 30 includes the outdoor air temperature sensor 62 but does not include the outdoor air humidity sensor 63, only the first procedure can be adopted.

The control unit 36 in the ventilator 30 according to the present embodiment has a function of determining whether or not the ventilator 30 includes the outdoor air humidity sensor 63. When the control unit 36 determines that the ventilator 30 includes the outdoor air humidity sensor 63, the control unit 36 selects to execute the second procedure out of the first and second procedures. The second procedure includes determination of whether or not to start the outdoor air cooling operation in consideration of the outdoor air humidity not only outdoor air temperature, and is thus regarded as achieving more effective outdoor air cooling operation. When the control unit 36 determines that the ventilator 30 does not include the outdoor air humidity sensor 63, the control unit 36 selects to execute the first procedure.

(Processing of stopping outdoor air cooling operation)

While the ventilator 30 is executing outdoor air cooling operation, the control unit 36 in the ventilator 30 stops the outdoor air cooling operation when a predetermined condition is satisfied.

Specifically, the control unit 36 in the ventilator 30 determines whether or not to stop the outdoor air cooling operation in accordance with a third procedure or a fourth procedure to be described below. The control units 36 in the ventilators 30 installed in the air conditioned zones Z1 and Z2 respectively independently execute the third procedure or the fourth procedure. When the air conditioned zone Z1 or Z2 is provided with a plurality of ventilators 30, the control unit 36 in at least one of the ventilators 30 executes the third procedure or the fourth procedure.

(Third procedure)

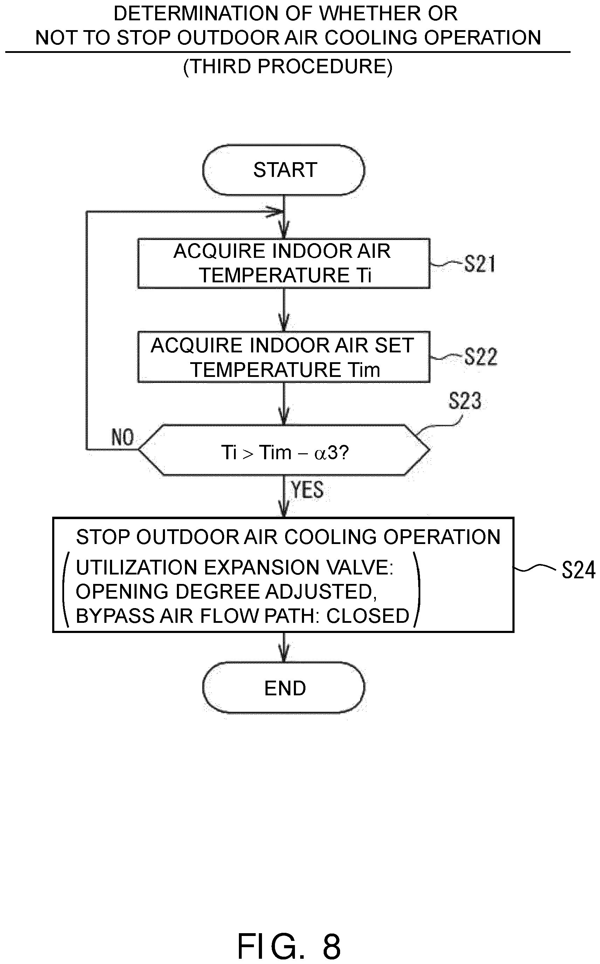

FIG. 8 is a flowchart depicting the third procedure in order to stop the outdoor air cooling operation.

In step S21, the control unit 36 in the ventilator 30 acquires the indoor air temperature Ti in the air conditioned zone Z1 or Z2 from the indoor air temperature sensor 61.

In step S22, the control unit 36 acquires the indoor air set temperature (target temperature) Tim from the remote controller 13.

In step S23, the control unit 36 determines whether or not the indoor air temperature Ti and the indoor air set temperature Tim satisfy a condition according to a formula (3).

$$Ti > Tim - \alpha 3 \quad \dots \quad (3)$$

The formula (3) includes a constant $\alpha 3$ specifying a difference between the indoor air temperature Ti and the indoor air set temperature Tim, and being referred to for determination of whether or not to stop the outdoor air cooling operation. The constant $\alpha 3$ can be set to a desired value by the user with use of the remote controller 13, in accordance with the environment in the air conditioned zone Z1 or Z2 or the like.

When the indoor air temperature Ti exceeds a temperature lower than the indoor air set temperature Tim by the predetermined value $\alpha 3$, introduction of outdoor air into the air conditioned zone Z1 or Z2 will not lead to substantial decrease in indoor air temperature Ti, and the indoor air temperature Ti may eventually exceed the indoor air set temperature Tim. When the condition according to the formula (3) is satisfied, the control unit 36 thus stops the outdoor air cooling operation in step S24.

Specifically, the control unit 36 transmits, to the remote controller 13, "stop information" indicating stop of the outdoor air cooling operation. In accordance with the stop information, the remote controller 13 transmits, to the control unit 29 in the utilization unit 12, a command to start the "normal cooling operation". The control unit 29 opens and adjusts an opening degree of the utilization expansion valve 25 to supply the refrigerant to the utilization heat exchanger 26 in order to restart the "normal cooling operation".

Further, as depicted in FIG. 3, the control unit 36 in the ventilator 30 controls the exhaust air damper 56 in the opening-closing mechanism 35 to cause the return air RA taken into the casing 31 via the return air intake port 41 to flow into the exhaust air flow path 46. The return air RA passes through the total heat exchanger 32 and is exhausted, as the exhaust air EA, to the outer space from the exhaust air blow-out port 42. The outdoor air OA taken into the casing 31 via the outdoor air intake port 43 passes through the total heat exchanger 32 for total heat exchange with the return air RA and is supplied into the room from the supplied air blow-out port 44 as the supplied air SA.

The air conditioned zone Z1 or Z2 is thus ventilated while performing total heat exchange between outdoor air and indoor air.

Assume that the outdoor air cooling operation stops when Ti > Tim is established in the formula (3). In this case, taking outdoor air into the air conditioned zone Z1 or Z2 may lead to temperature increase in the air conditioned zone Z1 or Z2. Accordingly, in the present embodiment, the outdoor air cooling operation is stopped and the normal cooling operation is restarted when the indoor air temperature Ti exceeds a temperature lower than the indoor air set temperature Tim by the predetermined value $\alpha 3$. As a result, comfortable temperature in the air conditioned zone Z1 or Z2 can be maintained.

(Fourth procedure)

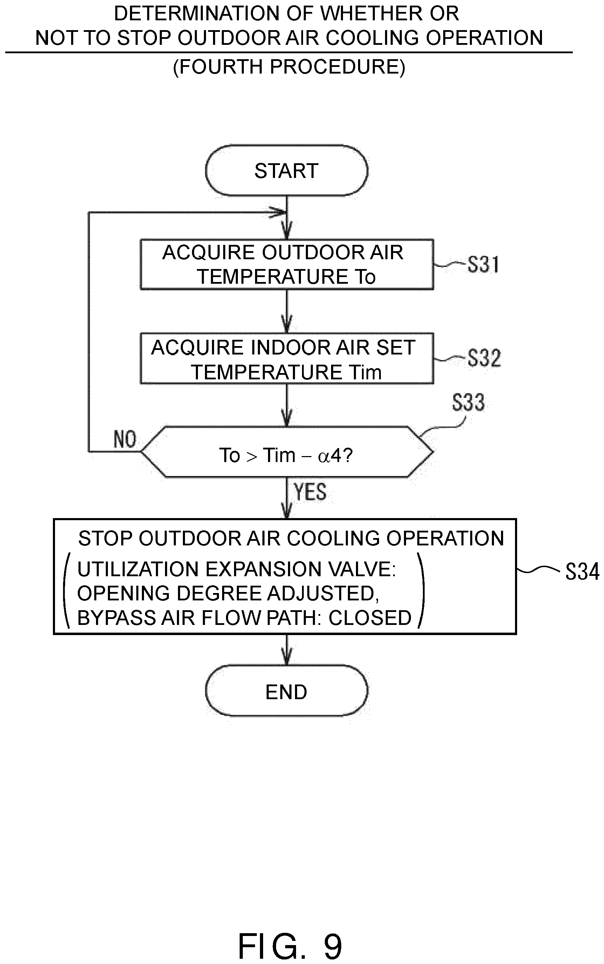

FIG. 9 is a flowchart depicting the fourth procedure in order to stop the outdoor air cooling operation.

In step S31, the control unit 36 in the ventilator 30 acquires the outdoor air temperature To from the outdoor air temperature sensor 62.

In step S32, the control unit 36 acquires the indoor air set temperature (target temperature) Tim from the remote controller 13.

In step S33, the control unit 36 determines whether or not the outdoor air temperature To and the indoor air set temperature Tim satisfy a condition according to a formula (4).

$$To > Tim - \alpha 4 \ ... \quad (4)$$

The formula (4) includes a constant $\alpha 4$ specifying a difference between the outdoor air temperature To and the indoor air set temperature Tim, and being referred to for determination of whether or not to stop the outdoor air cooling operation. The setting of the constant $\alpha 4$ is changeable by the user with use of the remote controller 13 or the like, in accordance with the environment in the air conditioned zone Z1 or Z2 or the like.

When the outdoor air temperature To exceeds a temperature lower than the indoor air set temperature Tim by the predetermined value $\alpha 4$, introduction of outdoor air into the air conditioned zone Z1 or Z2 will not lead to decrease in indoor air temperature Ti, and the indoor air temperature Ti may eventually exceed the indoor air set temperature Tim. When the condition according to the formula (4) is satisfied, the control unit 36 thus stops the outdoor air cooling operation in step S34.

Specifically, the control unit 36 transmits, to the remote controller 13, "stop information" indicating stop of the outdoor air cooling operation. In accordance with the stop information, the remote controller 13 transmits, to the control unit 29 in the utilization unit 12, a command to start the "normal cooling operation". The control unit 29 opens and adjusts the opening degree of the utilization expansion valve 25 to supply the refrigerant to the utilization heat exchanger 26 in order to restart the normal cooling operation.

Further, as depicted in FIG. 3, the control unit 36 in the ventilator 30 controls the exhaust air damper 56 in the opening-closing mechanism 35 to close the bypass air flow path 49. The return air RA taken into the casing 31 via the return air intake port 41 accordingly flows in the exhaust air flow path 46, passes through the total heat exchanger 32, and is exhausted to the outer space from the exhaust air blow-out port 42 as the exhaust air EA. The outdoor air OA taken into the casing 31 via the outdoor air intake port 43 passes through the total heat exchanger 32 for total heat exchange with the return air RA and is supplied into the room from the supplied air blow-out port 44 as the supplied air SA.

The air conditioned zone Z1 or Z2 is thus ventilated while performing total heat exchange between outdoor air and indoor air.

Assume that the outdoor air cooling operation stops when To > Tim is established in the formula (4). In this case, taking outdoor air into the air conditioned zone Z1 or Z2 may lead to temperature increase in the air conditioned zone Z1 or Z2. Accordingly, in the present embodiment, the outdoor air cooling operation is stopped and the normal cooling operation is restarted when the outdoor air temperature To exceeds a temperature lower than the indoor air set temperature Tim by the predetermined value $\alpha 4$. As a result, comfortable temperature in the air conditioned zone Z1 or Z2 can be maintained.

Only one of the third procedure and the fourth procedure may be adopted, or both may be adopted and the outdoor air cooling operation may be stopped when the condition for either one of the third procedure or the fourth procedure is satisfied.

<Other embodiments>

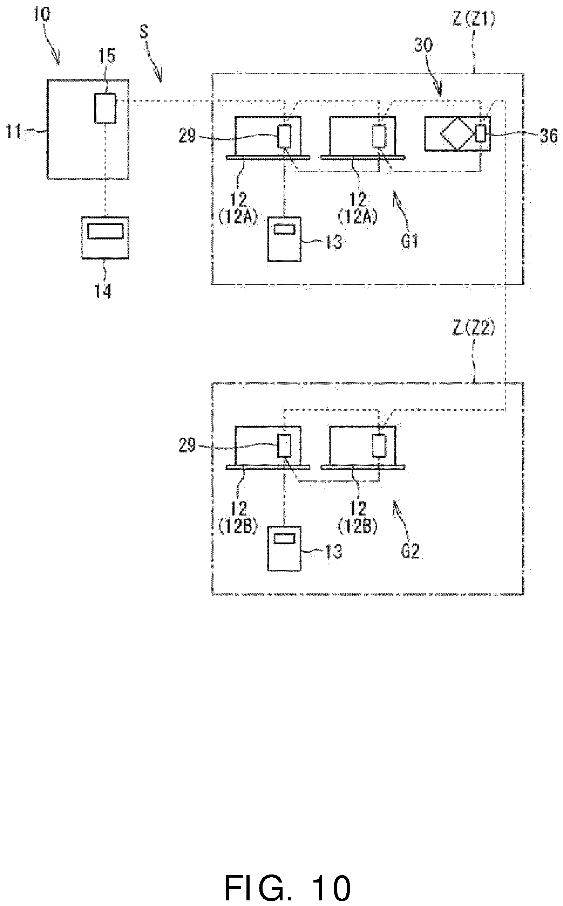

FIG. 10 is an explanatory configuration diagram of an air conditioning system according to another embodiment of the present invention.

FIG. 10 is an embodiment in which the first air conditioned zone Z1 is provided with the first utilization units 12A and the ventilator 30. However, in this embodiment, the second air conditioned zone Z2 is provided with the second utilization units 12B and no ventilator 30.

Accordingly, the outdoor air cooling operation is performed when the predetermined outdoor air condition is satisfied in the first air conditioned zone Z1 as in the above embodiment, whereas the outdoor air cooling operation is not performed and only the normal cooling operation is performed in the second air conditioned zone Z2. Even in a case where the outdoor air cooling operation is performed and the normal cooling operation by the utilization units 12 stops in the first air conditioned zone Z1, the normal cooling operation can be performed smoothly in the second air conditioned zone Z2 because the compressor 18 in the heat source unit 11 operates continuously. Each of the utilization units 12 in the second air conditioned zone Z2 may not include the utilization expansion valve 25 because the outdoor air cooling operation is not performed in the second air conditioned zone Z2.

The present invention should not be limited to the embodiments described above, but can include various modifications within the scope of the claims.

For example, the ventilator 30 according to the above embodiment includes the temperature sensor 62 configured to detect outdoor air temperature. The temperature sensor 62 may alternatively be provided at the heat source unit 11 in the air conditioner 10. In this case, however, the temperature sensor may detect heat of the heat exchanger 20 or the like in the heat source unit 11 and may thus fail to detect outdoor air temperature precisely. The temperature sensor is thus more preferred to be provided at the ventilator 30.

The control unit 36 in the ventilator 30 according to the above embodiment determines whether or not to start and whether or not to stop the outdoor air cooling operation and commands to open and close the bypass air flow path 49 and to open and close the utilization expansion valve 25. Any of these processing may alternatively be executed by the control unit 29 or 15. In other words, the control unit (controller) configured to execute various processing for the outdoor air cooling operation may be provided at any constituent element included in the air conditioning system S.

In each of the groups G1 and G2, the utilization expansion valve 25 may not be provided to every one of the utilization units 12 but is provided to at least one of the utilization units 12. In each of the groups G1 and G2, a flow rate control valve configured to adjust a flow rate of a refrigerant flowing to the heat exchanger 26, may be provided inside or outside the utilization unit 12, in place of or in addition to the utilization expansion valve 25. In this case, when the ventilator 30 performs the outdoor air cooling operation, the normal cooling operation by the air conditioner 10 can be stopped by closing this flow rate control valve.

The bypass air flow path in the ventilator 30 may alternatively bypass the supplied air flow path 47 and connect the outdoor air intake port 43 and the supplied air blow-out port 44.

< Operation and effect of embodiments>

(1) The air conditioning system S according to the above embodiment includes the air conditioner 10 having the heat source unit 11 and a plurality of utilization units 12 constituting a single refrigerant circuit system, the ventilator 30, and a controller (control unit 29 or 36) configured to control the air conditioner 10 and the ventilator 30. The air conditioning system S is configured to perform cooling operation in an air conditioning target space Z. The plurality of utilization units 12 is divided at least into the first utilization unit 12A belonging to the first group G1 and the second utilization unit 12B belonging to the second group G2. The ventilator 30 is included in the first group G1. In the first group G1, the first utilization unit 12A includes the heat exchanger 26. The first group G1 includes a valve (a utilization expansion valve 25 or a flow rate control valve) configured to adjust a flow rate of a refrigerant flowing to the at least one heat exchanger 26 of the first utilization unit 12A. When, as to the first group G1, a predetermined outdoor air condition is satisfied for outdoor air, which is air outside the air conditioning target space Z, the controller 29 or 36 closes the valve 25 and causes the ventilator 30 to perform outdoor air cooling operation in the first group G1.

In the air conditioning system S, when the predetermined outdoor air condition is satisfied as to the first group G1, the first utilization unit 12A in the first group G1 can be brought into a substantially stopped state without stopping the heat source unit 11, and the ventilator 30 can perform the outdoor air cooling operation. The air conditioning system S can thus reduce the total amount of refrigerant circulation and the load of the compressor 18 to achieve reduction in electric power consumption.

(2) In the embodiment described above, the second utilization unit 12B includes the heat exchanger 26. The second group G2 includes the valve 25 configured to adjust a flow rate of a refrigerant flowing to the at least one heat exchanger 26 of the second utilization unit 12B. When the outdoor air condition is satisfied as to the first group G1, the controller 29 or 36 keeps controlling the opening degree of the valve 25 in the second group G2. In other words, the second utilization unit 12B in the second group G2 continues the normal cooling operation. This configuration enables the normal cooling operation in the second group G2 to maintain comfortable temperature in the second air conditioned zone Z2, while performing the outdoor air cooling operation in the first group G1.

(3) In the above embodiment, the second group G2 also includes the ventilator 30. When the outdoor air condition is satisfied as to the second group G2, the controller 29 or 36 closes the valve 25 in the utilization unit 12 and causes the ventilator 30 to perform the outdoor air cooling operation in the second group G2. This configuration achieves the outdoor air cooling operation also in the second group G2 as in the first group G1, and the entire air conditioning system S can thus reduce the total amount of the refrigerant circulation and the load of the compressor 18 to achieve reduction in electric power consumption.

(4) In the first procedure (see FIG. 6) described in the above embodiment, the outdoor air condition is a condition that the outdoor air temperature detected by the outdoor air temperature sensor 62 is lower than the indoor air set temperature Tim by at least the first predetermined value $\alpha 1$ (see the formula (1)). Accordingly, when the indoor air set temperature Tim in the first group G1 is higher than the indoor air set temperature Tim in the second group G2, the outdoor air condition is satisfied as to the first group G1, and the outdoor air condition is not satisfied as to the second group G2, the controller 29 or 36 closes the valve 25 in the first utilization unit 12A and causes the ventilator 30 to perform the outdoor air cooling operation in the first group G1, and keeps controlling the opening degree of the valve 25 in the second group G2.

With this configuration, it is possible to determine, according to the outdoor air temperature To, whether or not the outdoor air cooling operation can be performed, and appropriate cooling operation can be performed in each of the groups G1 and G2 even when the first group G1 and the second group G2 have difference in indoor air set temperature Tim.

(5) In the above embodiment, the air conditioning system S includes the temperature sensor 62 configured to detect the outdoor air temperature and the humidity sensor 63 configured to detect the outdoor air humidity. In the second procedure (see FIG. 7), the outdoor air condition is a condition that the outdoor air enthalpy Xo obtained from the outdoor air temperature detected by the outdoor air temperature sensor 62 and the outdoor air humidity detected by the outdoor air humidity sensor 63 is less than the target enthalpy Xim for indoor air, which is air in the air conditioning target space Z, by at least the second predetermined value $\alpha 2$. This configuration achieves the outdoor air cooling operation in consideration of outdoor air humidity as well as outdoor air temperature.

(6) In the above embodiment, the outdoor air condition applied to the first group G1 may be different from the outdoor air condition applied to the second group G2. In this case, the outdoor air condition can be set appropriately in accordance with a state in each of the groups G1 and G2 (e.g. frequency of room use, the number of persons, a thermal load in the room).

(7) In the above embodiment, the air conditioning system S includes the outdoor air temperature sensor 62 configured to detect the outdoor air temperature and the humidity sensor 63 configured to detect the outdoor air humidity in the first group G1. In this case, the outdoor air condition applied to the first group G1 is a condition that the outdoor air enthalpy Xo obtained from the outdoor air temperature by the outdoor air temperature sensor 62 and the outdoor air humidity detected by the outdoor air humidity sensor 63 is less than the target enthalpy Xim for indoor air, which is air in the air conditioning target space Z, by at least the second predetermined value $\alpha 2$. In contrast, the outdoor air condition applied to the second group G2 is a condition that the outdoor air temperature To detected by the outdoor air temperature sensor 62 is lower than the indoor air set temperature Tim by at least the first predetermined value $\alpha 1$. This configuration enables the outdoor air cooling operation under an appropriate outdoor air condition in accordance with whether or not each of the groups G1 and G2 is provided with the outdoor air humidity sensor.

(8) In the above embodiment, settings of the first predetermined value $\alpha 1$ and the second predetermined value $\alpha 2$ are changeable. This configuration enables adjustment of a condition for the outdoor air cooling operation.

(9) The air conditioning system S according to the above embodiment includes the outdoor air temperature sensor 62 configured to detect the outdoor air temperature, and the controller (control unit 36) determines whether or not the air conditioning system S includes the outdoor air humidity sensor 63 configured to detect the outdoor air humidity. When the controller 36 determines that the air conditioning system S does not include the outdoor air humidity sensor 63, the outdoor air condition is set to a condition that, as described in the first procedure, the outdoor air temperature detected by the outdoor air temperature sensor 62 is lower than the set temperature Tim for indoor air, which is air in the air conditioning target space Z, by at least the first predetermined value $\alpha 1$. When the controller 36 determines that the air conditioning system S includes the outdoor air humidity sensor 63, the outdoor air condition is set to a condition that, as described in the second procedure, the outdoor air enthalpy Xo obtained from the outdoor air temperature detected by the outdoor air temperature sensor 62 and the outdoor air humidity detected by the outdoor air humidity sensor 63 is less than the indoor air target enthalpy Xim by at least the second predetermined value $\alpha 2$. This configuration enables setting of a more appropriate outdoor air condition in accordance with whether or not the outdoor air humidity sensor 63 is provided.

(10) In the above embodiment, the ventilator 30 includes the outdoor air temperature sensor 62. The outdoor air temperature sensor 62 in the ventilator 30 detects the temperature of outdoor air taken from the outer space via the duct. Therefore, accurate detection of the outdoor air temperature is possible without the influence of internal heat, differently from the case when the outdoor air temperature sensor is disposed in the heat source unit 11.

(11) According to the above embodiment, when temperature Ti of indoor air, which is air in the air conditioning target space Z, exceeds the temperature lower than the indoor air set temperature Tim by the third predetermined value $\alpha 3$ or when the outdoor air temperature To exceeds the temperature lower than the indoor air set temperature Tim by the fourth predetermined value $\alpha 4$ during the outdoor air cooling operation, the controller 29 or 36 opens the utilization expansion valve 25 being closed and controls the opening degree of the utilization expansion valve 25. In this configuration, the outdoor air cooling operation can be stopped and the normal cooling operation can be restarted when it is difficult to continue the outdoor air cooling operation.

(12) The setting of the third predetermined value $\alpha 3$ or the setting of the fourth predetermined value $\alpha 4$ is changeable. This configuration achieves adjustment of a condition for transition from the outdoor air cooling operation to the normal cooling operation.

## REFERENCE SIGNS LIST

10: air conditioner
11: heat source unit
12: utilization unit
12A: first utilization unit
12B: second utilization unit
13: remote controller
25: utilization expansion valve
26: utilization heat exchanger
29: control unit (controller)
30: ventilator
36: control unit (controller)
62: outdoor air temperature sensor
63: outdoor air humidity sensor
G1: first group
G2: second group
Ti: indoor air temperature
Tim: indoor air set temperature
To: outdoor air temperature
Xim: target enthalpy
Xo: outdoor air enthalpy
Z: air conditioning target space
$\alpha 1$: first predetermined value
$\alpha 2$: second predetermined value
$\alpha 3$: third predetermined value
$\alpha 4$: fourth predetermined value

## CITATION LIST

## PATENT LITERATURE

Patent Literature 1: JP 2006-308280 A

## Claims

1. An air conditioning system configured to perform cooling operation in an air conditioning target space (Z), the air conditioning system comprising:

   an air conditioner (10) including a heat source unit (11) and a plurality of utilization units (12) constituting a single refrigerant circuit system;
   a ventilator (30); and
   a controller (29, 36) configured to control the air conditioner (10) and the ventilator (30),
   wherein
   the plurality of utilization units (12) is divided at least into a first utilization unit (12A) that is installed in a first air conditioning target space (Z1) and belongs to a first group (G1), and a second utilization unit (12B) that is installed in a second air conditioning target space (Z2) and belongs to a second group (G2), the first air conditioning target space (Z1) and the second air conditioning target space (Z2) each serving as the air conditioning target space (Z),
   the ventilator (30) is included in the first group (G1) and is configured to ventilate air for the first air conditioning target space (Z1),
   the first utilization unit (12A) includes a heat exchanger (26),
   the second utilization unit (12B) includes a heat exchanger (26),
   the first group (G1) includes a valve (25) configured to adjust a flow rate of a refrigerant flowing to at least one heat exchanger (26) of the first utilization unit (12A), and
   the second group (G2) includes a valve (25) configured to adjust a flow rate of a refrigerant flowing to at least one heat exchanger (26) of the second utilization unit (12B),
   **characterized in that**,
   when, as to the first group (G1), an outdoor air condition is satisfied for outdoor air, which is air outside the air conditioning target space (Z), the controller (29, 36) is configured to close the valve (25) of the first group (G1) and cause the ventilator (30) of the first group (G1) to perform outdoor air cooling operation to introduce the outdoor air into the first air conditioning target space (Z1), and configured to keep controlling an opening degree of the valve (25) of the second group (G2) while operating the heat source unit (11) so that the cooling operation by the air conditioner (10) continues in the second air conditioning target space (Z2).

2. The air conditioning system according to claim 1, wherein

a ventilator (30) is also included in the second group (G2), and
when the outdoor air condition is satisfied as to the second group (G2), the controller (29, 36) is configured to close the valve (25) of the second group (G2) and cause the ventilator (30) of the second group (G2) to perform the outdoor air cooling operation to introduce the outdoor air into the second air conditioning target space (Z2) in the second group (G2).

3. The air conditioning system according to claim 2, further comprising

a temperature sensor (62) configured to detect outdoor air temperature, wherein
the outdoor air condition is a condition that the outdoor air temperature detected by the temperature sensor (62) is lower than a set temperature (Tim) for indoor air, which is air in the air conditioning target space (Z), by at least a first predetermined value ($\alpha$1), and
when a set temperature (Tim) for indoor air in the first group (G1) is higher than a set temperature (Tim) for indoor air in the second group (G2), the outdoor air condition is satisfied as to the first group (G1), and the outdoor air condition is not satisfied as to the second group (G2), the controller (29, 36) is configured to close the valve (25) of the first group (G1) and cause the ventilator (30) to perform the outdoor air cooling operation in the first group (G1), and configured to keep controlling the opening degree of the valve (25) of the second group (G2) in the second group (G2).

4. The air conditioning system according to claim 1 or 2, further comprising:

a temperature sensor (62) configured to detect outdoor air temperature; and
a humidity sensor (63) configured to detect outdoor air humidity, wherein
the outdoor air condition is a condition that an outdoor air enthalpy (Xo) obtained from the outdoor air temperature detected by the temperature sensor (62) and the outdoor air humidity detected by the humidity sensor (63) is less than a target enthalpy (Xim) for indoor air, which is air in the air conditioning target space (Z), by at least a second predetermined value ($\alpha$2).

5. The air conditioning system according to claim 2, wherein the outdoor air condition applied to the first group (G1) is different from the outdoor air condition applied to the second group (G2).

6. The air conditioning system according to claim 5, further comprising:

a temperature sensor (62) configured to detect outdoor air temperature; and
a humidity sensor (63) configured to detect outdoor air humidity in the first group (G1), wherein the outdoor air condition applied to the first group (G1) is a condition that an outdoor air enthalpy (Xo) obtained from the outdoor air temperature detected by the temperature sensor (62) and the outdoor air humidity detected by the humidity sensor (63) is less than a target enthalpy (Xim) for indoor air, which is air in the first air conditioning target space (Z1), by at least a second predetermined value ($\alpha$2), and
the outdoor air condition applied to the second group (G2) is a condition that the outdoor air temperature (To) detected by the temperature sensor (62) is lower than a set temperature (Tim) for indoor air, which is air in the second air conditioning target space (Z2), by at least a first predetermined value ($\alpha$1).

7. The air conditioning system according to claim 3 or 6, wherein a setting of the first predetermined value ($\alpha$1) is changeable.

8. The air conditioning system according to claim 4 or 6, wherein a setting of the second predetermined value ($\alpha$2) is changeable.

9. The air conditioning system according to claim 1 or 2, further comprising

a temperature sensor (62) configured to detect outdoor air temperature, wherein
the controller (36) is configured to determine whether or not the air conditioning system (S) includes a humidity sensor (63) configured to detect outdoor air humidity,
when the controller (36) determines that the humidity sensor (63) is not included, the outdoor air condition is set to a condition that the outdoor air temperature detected by the temperature sensor (62) is lower than a set temperature for indoor air, which is air in the air conditioning target space (Z), by at least a first predetermined value ($\alpha$1), and
when the controller (36) determines that the humidity sensor (63) is included, the outdoor air condition is set to a condition that an outdoor air enthalpy (Xo) obtained from the outdoor air temperature detected by the temperature sensor (62) and the outdoor air humidity detected by the humidity sensor (63) is less than a target enthalpy (Xim) for indoor air by at least a second predetermined value ($\alpha$2).

10. The air conditioning system according to any one of claims 3, 4, and 6 to 9, wherein the ventilator (30) includes the temperature sensor (62).

11. The air conditioning system according to any one of claims 1 to 10, wherein when temperature (Ti) of indoor air, which is air in the air conditioning target space (Z), exceeds a temperature lower than a set temperature (Tim) for indoor air by a third predetermined value ($\alpha$3) or when outdoor air temperature (To) exceeds a temperature lower than the set temperature (Tim) for indoor air by a fourth predetermined value ($\alpha$4) during the outdoor air cooling operation, the controller (29, 36) is configured to open the valve (25) being closed and control an opening degree of the valve (25).

12. The air conditioning system according to claim 11, wherein a setting of the third predetermined value ($\alpha$3) or a setting of the fourth predetermined value ($\alpha$4) is changeable.

13. The air conditioning system according to any one of claims 1 to 12, further comprising

remote controllers (13) configured to remotely control the utilization units (12) and/or the ventilator (30), wherein the utilization units (12) and the ventilator (30) are grouped in accordance with communicable connection to the identical remote controller (13).

14. The air conditioning system according to any one of claims 1 to 12, wherein the utilization units (12) and the ventilator (30) are grouped in accordance with identification codes assigned to the utilization units (12) and the ventilator (30).

**Patentansprüche**

1. Klimatisierungssystem, das konfiguriert ist, einen Kühlbetrieb in einem Klimatisierungszielraum (Z) durchzuführen, wobei das Klimatisierungssystem aufweist:

eine Klimaanlage (10), die eine Wärmequelleneinheit (11) und mehrere Nutzungseinheiten (12) aufweist, die ein einziges Kältemittelkreislaufsystem bilden; einen Ventilator (30); und

eine Steuerung (29, 36), die konfiguriert ist, die Klimaanlage (10) und den Ventilator (30) zu steuern, wobei

die mehreren Nutzungseinheiten (12) mindestens in eine erste Nutzungseinheit (12A), die in einem ersten Klimatisierungszielraum (Z1) installiert ist und zu einer ersten Gruppe (G1) gehört, und eine zweite Nutzungseinheit (12B) unterteilt sind, die in einem zweiten Klimatisierungszielraum (Z2) installiert ist und zu einer zweiten Gruppe (G2) gehört, wobei der erste Klimatisierungszielraum (Z1) und der zweite Klimatisierungszielraum (Z2) jeweils als der Klimatisierungszielraum (Z) dienen, der Ventilator (30) in der ersten Gruppe (G1) enthalten und konfiguriert ist, Luft für den ersten Klimatisierungszielraum (Z1) zu ventilieren, die erste Nutzungseinheit (12A) einen Wärmetauscher (26) aufweist, die zweite Nutzungseinheit (12B) einen Wärmetauscher (26) aufweist, die erste Gruppe (G1) ein Ventil (25) aufweist, das konfiguriert ist, eine Durchflussrate eines Kältemittels einzustellen, das zu mindestens einem Wärmetauscher (26) der ersten Nutzungseinheit (12A) fließt, und die zweite Gruppe (G2) ein Ventil (25) aufweist, das konfiguriert ist, eine Durchflussrate eines Kältemittels einzustellen, das zu mindestens einem Wärmetauscher (26) der zweiten Nutzungseinheit (12B) fließt, **dadurch gekennzeichnet, dass**, wenn in Bezug auf die erste Gruppe (G1) eine Außenluftbedingung für Außenluft erfüllt ist, die Luft außerhalb des Klimatisierungszielraums (Z) ist, die Steuerung (29, 36) konfiguriert ist, das Ventil (25) der ersten Gruppe (G1) zu schließen und den Ventilator (30) der ersten Gruppe (GI) zu veranlassen, einen Außenluftkühlbetrieb durchzuführen, um die Außenluft in den ersten Klimatisierungszielraum (Z1) einzuleiten, und konfiguriert ist, einen Öffnungsgrad des Ventils (25) der zweiten Gruppe (G2) weiterhin zu steuern, während sie die Wärmequelleneinheit (11) betreibt, so dass der Kühlbetrieb durch die Klimaanlage (10) im zweiten Klimatisierungszielraum (Z2) fortgesetzt wird.

2. Klimatisierungssystem nach Anspruch 1, wobei ein Ventilator (30) auch in der zweiten Gruppe (G2) enthalten ist, und wenn die Außenluftbedingung für die zweite Gruppe (G2) erfüllt ist, die Steuerung (29, 36) konfiguriert ist, das Ventil (25) der zweiten Gruppe (G2) zu schließen und den Ventilator (30) der zweiten Gruppe (G2) zu veranlassen, den Außenluftkühlbetrieb durchzuführen, um die Außenluft in den zweiten Klimatisierungszielraum (Z2) in der zweiten Gruppe (G2) einzuleiten.

3. Klimatisierungssystem nach Anspruch 2, das ferner aufweist einen Temperatursensor (62), der konfiguriert ist, die Außenlufttemperatur zu erfassen, wobei

die Außenluftbedingung eine Bedingung ist, dass die vom Temperatursensor (62) erfasste Außenlufttemperatur um mindestens einen ersten vorbestimmten Wert ($\alpha$1) niedriger ist als eine Solltemperatur (Tim) für Innenluft, die Luft im Klimatisierungszielraum (Z) ist, und wenn eine Solltemperatur (Tim) für Innenluft in der ersten Gruppe (G1) höher ist als eine Solltemperatur (Tim) für Innenluft in der zweiten Gruppe (G2), die Außenluftbedingung in Bezug auf die erste Gruppe (G1) erfüllt ist und die Außenluftbedingung in Bezug auf die zweite Gruppe (G2) nicht erfüllt ist, die Steuerung (29, 36) konfiguriert ist, das Ventil (25) der ersten Gruppe (G1) zu schließen und den Ventilator (30) zu veranlassen, den Außenluftkühlbetrieb in der ersten Gruppe (G1) durchzuführen, und konfiguriert ist, den Öffnungsgrad des Ventils (25) der zweiten Gruppe (G2) in der zweiten Gruppe (G2) weiterhin zu steuern.

4. Klimatisierungssystem nach Anspruch 1 oder 2, das ferner aufweist

einen Temperatursensor (62), der konfiguriert ist, die Außenlufttemperatur zu erfassen; und einen Feuchtigkeitssensor (63), der konfiguriert ist, die Außenluftfeuchtigkeit zu erfassen, wobei der Außenluftzustand ein Zustand ist, bei dem eine Außenluft-Enthalpie (Xo), die aus der vom Temperatursensor (62) erfassten Außenlufttemperatur und der vom Feuchtigkeitssensor (63) erfassten Außenluftfeuchtigkeit erhalten wird, um mindestens einen zweiten vorbestimmten Wert ($\alpha$2) geringer ist als eine Soll-Enthalpie (Xim) für Innenluft, die Luft im Klimatisierungszielraum (Z) ist.

5. Klimatisierungssystem nach Anspruch 2, wobei sich die auf die erste Gruppe (G1) angewandte Außenluftbedingung von der auf die zweite Gruppe (G2) angewandten Außenluftbedingung unterscheidet.

6. Klimatisierungssystem nach Anspruch 5, das ferner aufweist

einen Temperatursensor (62), der konfiguriert ist, die Außenlufttemperatur zu erfassen; und einen Feuchtigkeitssensor (63), der konfiguriert ist, die Außenluftfeuchtigkeit in der ersten Gruppe (G1) zu erfassen, wobei die Außenluftbedingung, die auf die erste Gruppe (G1) angewendet wird, eine Bedingung ist, dass eine Außenluft-Enthalpie (Xo), die aus der vom Temperatursensor (62) erfassten Außenlufttemperatur und der vom Feuchtigkeitssensor (63) erfassten Außenluftfeuchtigkeit erhalten wird, um mindestens einen zweiten vorbestimmten Wert ($\alpha$2) geringer ist als eine Soll-Enthalpie (Xim) für Innenluft, die Luft im ersten Klimatisierungszielraum (Z1) ist, und die Außenluftbedingung, die auf die zweite Gruppe (G2) angewendet wird, eine Bedingung ist, dass die vom Temperatursensor (62) erfasste Außenlufttemperatur (To) um mindestens einen ersten vorbestimmten Wert ($\alpha$1) niedriger ist als eine Solltemperatur (Tim) für die Innenluft, die die Luft in dem zweiten Klimatisierungszielraum (Z2) ist.

7. Klimatisierungssystem nach Anspruch 3 oder 6, wobei eine Einstellung des ersten vorbestimmten Wertes ($\alpha$1) veränderbar ist.

8. Klimatisierungssystem nach Anspruch 4 oder 6, wobei eine Einstellung des zweiten vorbestimmten Wertes ($\alpha$2) veränderbar ist.

9. Klimatisierungssystem nach Anspruch 1 oder 2, das ferner aufweist

einen Temperatursensor (62), der konfiguriert ist, die Außenlufttemperatur zu erfassen, wobei die Steuerung (36) konfiguriert ist, festzustellen, ob das Klimatisierungssystem (S) einen Feuchtigkeitssensor (63) aufweist, der konfiguriert ist, die Außenluftfeuchtigkeit zu erfassen, wenn die Steuerung (36) feststellt, dass der Feuchtigkeitssensor (63) nicht enthalten ist, die Außenluftbedingung auf eine Bedingung eingestellt wird, dass die von dem Temperatursensor (62) erfasste Außenlufttemperatur um mindestens einen ersten vorbestimmten Wert ($\alpha$1) niedriger ist als eine eingestellte Temperatur für Innenluft, die Luft im Klimatisierungszielraum (Z) ist, und wenn die Steuerung (36) feststellt, dass der Feuchtigkeitssensor (63) enthalten ist, die Außenluftbedingung auf eine Bedingung eingestellt wird, dass eine Außenluft-Enthalpie (Xo), die aus der von dem Temperatursensor (62) erfassten Außenlufttemperatur und der von dem Feuchtigkeitssensor (63) erfassten Außenluftfeuchtigkeit erhalten wird, um mindestens einen zweiten vorbestimmten Wert ($\alpha$2) geringer ist als eine Soll-Enthalpie (Xim) für Innenluft.

10. Klimatisierungssystem nach einem der Ansprüche 3, 4 und 6 bis 9, wobei der Ventilator (30) den Temperatursensor (62) aufweist.

**11.** Klimatisierungssystem nach einem der Ansprüche 1 bis 10, wobei, wenn die Temperatur (Ti) der Innenluft, die Luft im Klimatisierungszielraum (Z) ist, eine Temperatur, die niedriger ist als eine Solltemperatur (Tim) für die Innenluft, um einen dritten vorbestimmten Wert ($\alpha$3) überschreitet, oder wenn die Außenlufttemperatur (To) eine Temperatur, die niedriger ist als die Solltemperatur (Tim) für die Innenluft, um einen vierten vorbestimmten Wert ($\alpha$4) während des Außenluftkühlungsbetriebs überschreitet, die Steuerung (29, 36) konfiguriert ist, das Ventil (25), das geschlossen ist, zu öffnen und einen Öffnungsgrad des Ventils (25) zu steuern.

**12.** Klimatisierungssystem nach Anspruch 11, wobei eine Einstellung des dritten vorbestimmten Wertes ($\alpha$3) oder eine Einstellung des vierten vorbestimmten Wertes ($\alpha$4) veränderbar ist.

**13.** Klimatisierungssystem nach einem der Ansprüche 1 bis 12, das ferner Fernsteuerungen (13) aufweist, die konfiguriert sind, die Nutzungseinheiten (12) und/oder den Ventilator (30) fernzusteuern, wobei die Nutzungseinheiten (12) und der Ventilator (30) entsprechend der kommunizierbaren Verbindung mit der identischen Fernsteuerung (13) gruppiert sind.

**14.** Klimatisierungssystem nach einem der Ansprüche 1 bis 12, wobei die Nutzungseinheiten (12) und der Ventilator (30) gemäß Identifikationscodes gruppiert sind, die den Nutzungseinheiten (12) und dem Ventilator (30) zugeordnet sind.

**Revendications**

**1.** Système de climatisation prévu pour exécuter un processus de refroidissement dans un espace cible de climatisation (Z), ledit système de climatisation comprenant :

un climatiseur (10) comprenant une unité de source de chaleur (11) et une pluralité d'unités d'utilisation (12) constituant un seul système de circuit de réfrigérant ;
un ventilateur (30) ; et
un contrôleur (29, 36) prévu pour commander le climatiseur (10) et le ventilateur (30),
où
la pluralité d'unités d'utilisation (12) est divisée au moins en une première unité d'utilisation (12A) installée dans un premier espace cible de climatisation (Z1) et appartenant à un premier groupe (G1), et en une deuxième unité d'utilisation (12B) installée dans un deuxième espace cible de climatisation (Z2) et appartenant à un deuxième groupe (G2), le premier espace cible de climatisation (Z1) et le deuxième espace cible de climatisation (Z2) servant chacun d'espace cible de climatisation (Z), le ventilateur (30) est compris dans le premier groupe (G1) et est prévu pour ventiler de l'air pour le premier espace cible de climatisation (Z1),
la première unité d'utilisation (12A) comprend un échangeur de chaleur (26),
la deuxième unité d'utilisation (12B) comprend un échangeur de chaleur (26), le premier groupe (G1) comprend une vanne (25) prévue pour régler le débit d'un réfrigérant s'écoulant vers au moins un échangeur de chaleur (26) de la première unité d'utilisation (12A), et
le deuxième groupe (G2) comprend une vanne (25) prévue pour régler le débit d'un réfrigérant s'écoulant vers au moins un échangeur de chaleur (26) de la deuxième unité d'utilisation (12B),
**caractérisé en ce que**, lorsque, concernant le premier groupe (G1), une climatisation d'air extérieur est satisfaite pour l'air extérieur, lequel est l'air en dehors de l'espace cible de climatisation (Z), le contrôleur (29, 36) est prévu pour fermer la vanne (25) du premier groupe (G1) et entraîner l'exécution par le ventilateur (30) du premier groupe (G1) d'un processus de refroidissement d'air extérieur afin d'introduire l'air extérieur dans le premier espace cible de climatisation (Z1), et prévu pour maintenir la commande d'un degré d'ouverture de la vanne (25) du deuxième groupe (G2) pendant le fonctionnement de l'unité de source de chaleur (11) de sorte que le processus de refroidissement par le climatiseur (10) continue dans le deuxième espace cible de climatisation (Z2).

**2.** Système de climatisation selon la revendication 1, où un ventilateur (30) est également compris dans le deuxième groupe (G2), et où, lorsque la climatisation d'air extérieur est satisfaite concernant le deuxième groupe (G2), le contrôleur (29, 36) est prévu pour fermer la vanne (25) du deuxième groupe (G2) et entraîner l'exécution par le ventilateur (30) du deuxième groupe (G2) du processus de refroidissement d'air extérieur afin d'introduire l'air extérieur dans le deuxième espace cible de climatisation (Z2) du deuxième groupe (G2).

**3.** Système de climatisation selon la revendication 2, comprenant en outre

un capteur de température (62) prévu pour détecter la température de l'air extérieur, où
la climatisation d'air extérieur est un état où la température d'air extérieur détectée par le capteur de température (62) est inférieure à une température réglée (Tim) pour l'air intérieur, lequel est l'air dans l'espace cible de climatisation (Z), d'au moins une première valeur prédéfinie (α1), et où,

lorsqu'une température réglée (Tim) pour l'air intérieur dans le premier groupe (G1) est supérieure à une température réglée (Tim) pour l'air intérieur dans le deuxième groupe (G2), la climatisation d'air extérieur est satisfaite concernant le premier groupe (G1), et la climatisation d'air extérieur n'est pas satisfaite concernant le deuxième groupe (G2), le contrôleur (29, 36) est prévu pour fermer la vanne (25) du premier groupe (G1) et entraîner l'exécution par le ventilateur (30) du processus de refroidissement d'air extérieur dans le premier groupe (G1), et est prévu pour maintenir la commande du degré d'ouverture de la vanne (25) du deuxième groupe (G2) dans le deuxième groupe (G2).

4. Système de climatisation selon la revendication 1 ou la revendication 2, comprenant en outre :

un capteur de température (62) prévu pour détecter une température d'air extérieur ; et un capteur d'humidité (63) prévu pour détecter une humidité d'air extérieur, où la climatisation d'air extérieur est un état où une enthalpie (Xo) d'air extérieur obtenue à partir de la température d'air extérieur détectée par le capteur de température (62) et de l'humidité d'air extérieur détectée par le capteur d'humidité (63) est inférieure à une enthalpie de consigne (Xim) pour l'air intérieur, lequel est l'air dans l'espace cible de climatisation (Z), d'au moins une deuxième valeur prédéfinie (α2).

5. Système de climatisation selon la revendication 2, où la climatisation d'air extérieur appliquée au premier groupe (G1) est différente de la climatisation d'air extérieur appliquée au deuxième groupe (G2).

6. Système de climatisation selon la revendication 5, comprenant en outre :

un capteur de température (62) prévu pour détecter une température d'air extérieur ; et un capteur d'humidité (63) prévu pour détecter une humidité d'air extérieur dans le premier groupe (G1), où la climatisation d'air extérieur appliquée au premier groupe (G1) est un état où une enthalpie (Xo) d'air extérieur obtenue à partir de la température d'air extérieur détectée par le capteur de température (62) et de l'humidité d'air extérieur détectée par le capteur d'humidité (63) est inférieure à une enthalpie de consigne (Xim) pour l'air intérieur, lequel est l'air dans le premier espace cible de climatisation (Z1), d'au moins une deuxième valeur prédéfinie (α2), et

la climatisation d'air extérieur appliquée au deuxième groupe (G2) est un état où la température d'air extérieur (To) détectée par le capteur de température (62) est inférieure à une température réglée (Tim) pour l'air intérieur, lequel est l'air dans le deuxième espace cible de climatisation (Z2), d'au moins une première valeur prédéfinie (α1).

7. Système de climatisation selon la revendication 3 ou la revendication 6, où un réglage de la première valeur prédéfinie (α1) est modifiable.

8. Système de climatisation selon la revendication 4 ou la revendication 6, où un réglage de la deuxième valeur prédéfinie (α2) est modifiable.

9. Système de climatisation selon la revendication 1 ou la revendication 2, comprenant en outre

un capteur de température (62) prévu pour détecter une température d'air extérieur, où le contrôleur (36) est prévu pour déterminer si le système de climatisation (S) comprend ou non un capteur d'humidité (63) prévu pour détecter l'humidité d'air extérieur, lorsque le contrôleur (36) détermine que le capteur d'humidité (63) n'est pas compris, la climatisation d'air extérieur est réglée sur un état où la température d'air extérieur détectée par le capteur de température (62) est inférieure à une température réglée pour l'air intérieur, lequel est l'air dans l'espace cible de climatisation (Z), d'au moins une première valeur prédéfinie (α1), et où, lorsque le contrôleur (36) détermine que le capteur d'humidité (63) est compris, la climatisation d'air extérieur est réglée sur un état où une enthalpie (Xo) d'air extérieur obtenue à partir de la température d'air extérieur détectée par le capteur de température (62) et de l'humidité d'air extérieur détectée par le capteur d'humidité (63) est inférieure à une enthalpie de consigne (Xim) pour l'air intérieur d'au moins une deuxième valeur prédéfinie (α2).

10. Système de climatisation selon l'une des revendications 3, 4, et 6 à 9, où le ventilateur (30) comprend le capteur de température (62).

11. Système de climatisation selon l'une des revendications 1 à 10, où, lorsqu'une température (Ti) de l'air intérieur, lequel est l'air dans l'espace cible de climatisation (Z), dépasse une température inférieure à une température réglée (Tim) pour l'air intérieur d'une troisième valeur prédéfinie (α3), ou lorsqu'une température de l'air extérieur (To) dépasse une température inférieure à la température réglée (Tim) pour l'air intérieur d'une quatrième valeur prédéfinie (α4) pendant le processus de refroidissement d'air extérieur, le contrôleur (29, 36) est prévu pour ouvrir la vanne (25) fermée et commander le degré d'ouverture de la vanne (25).

**12.** Système de climatisation selon la revendication 11, où un réglage de la troisième valeur prédéfinie (α3) ou un réglage de la quatrième valeur prédéfinie (α4) sont modifiables.

**13.** Système de climatisation selon l'une des revendications 1 à 12, comprenant en outre des télécommandes (13) prévues pour commander à distance les unités d'utilisation (12) et/ou le ventilateur (30), où les unités d'utilisation (12) et le ventilateur (30) sont groupés suivant une liaison de communication à une télécommande (13) identique.

**14.** Système de climatisation selon l'une des revendications 1 à 12, où les unités d'utilisation (12) et le ventilateur (30) sont groupés suivant des codes d'identification attribués aux unités d'utilisation (12) et au ventilateur (30).

FIG. 1

FIG. 2

EP 3 792 565 B1

FIG. 3

(a)

TO OUTER SPACE

30

TO AIR CONDITIONED ZONE

33    F1    32    47b    31    51

EA

52

42    47a    41

46b    46a

46

(b)

TO OUTER SPACE

30

TO AIR CONDITIONED ZONE

52    31    46b    32    F2    34

OA    SA

51

43    46a    44

47a    47b

47

FIG. 4

FIG. 5

EP 3 792 565 B1

## DETERMINATION OF WHETHER OR NOT TO START OUTDOOR AIR COOLING OPERATION
### (FIRST PROCEDURE)

```
                    ( START )
                        │
          ┌─────────────▼──────────────┐
          │   ┌────────────────────┐
          │   │  ACQUIRE OUTDOOR AIR │ ~S1
          │   │   TEMPERATURE To     │
          │   └────────────────────┘
          │             │
          │   ┌────────────────────┐
          │   │  ACQUIRE INDOOR AIR  │ ~S2
          │   │  SET TEMPERATURE Tim │
          │   └────────────────────┘
          │             │          S3
          │   NO  ◇────────────────◇
          └──────  To ≤ Tim − α1?
                          │
                         YES
                          │
      ┌───────────────────▼──────────────────────┐
      │ START OUTDOOR AIR COOLING OPERATION       │ ~S4
      │ ( UTILIZATION EXPANSION VALVE: CLOSED,     │
      │   BYPASS AIR FLOW PATH: OPEN          )    │
      └───────────────────┬──────────────────────┘
                          │
                      (  END  )
```

$To \leq Tim - \alpha1?$

# FIG. 6

# DETERMINATION OF WHETHER OR NOT TO START OUTDOOR AIR COOLING OPERATION
## (SECOND PROCEDURE)

START

ACQUIRE OUTDOOR AIR TEMPERATURE AND OUTDOOR AIR HUMIDITY ～S11

ACQUIRE INDOOR AIR SET TEMPERATURE AND INDOOR AIR SET HUMIDITY ～S12

CALCULATE OUTDOOR AIR ENTHALPY Xo AND INDOOR AIR TARGET ENTHALPY Xim ～S13

S14

NO ◁ $Xo \leq Xim - \alpha2?$

YES

START OUTDOOR AIR COOLING OPERATION
(UTILIZATION EXPANSION VALVE: CLOSED, BYPASS AIR FLOW PATH: OPEN) ～S15

END

# FIG. 7

## DETERMINATION OF WHETHER OR
## NOT TO STOP OUTDOOR AIR COOLING OPERATION
### (THIRD PROCEDURE)

```
            ┌─────────────┐
            │    START    │
            └─────────────┘
                   │
    ┌──────────────┤
    │   ┌────────────────────────┐
    │   │   ACQUIRE INDOOR AIR   │───S21
    │   │   TEMPERATURE Ti       │
    │   └────────────────────────┘
    │              │
    │   ┌────────────────────────┐
    │   │  ACQUIRE INDOOR AIR SET│───S22
    │   │   TEMPERATURE Tim      │
    │   └────────────────────────┘
    │              │                    S23
    │ NO  ╱────────────────────╲
    └────<    Ti > Tim − α3?     >
          ╲────────────────────╱
                   │ YES
    ┌─────────────────────────────────────────┐
    │  STOP OUTDOOR AIR COOLING OPERATION      │
    │ ⎛ UTILIZATION EXPANSION VALVE:       ⎞   │───S24
    │ ⎜ OPENING DEGREE ADJUSTED,           ⎟   │
    │ ⎝ BYPASS AIR FLOW PATH: CLOSED       ⎠   │
    └─────────────────────────────────────────┘
                   │
            ┌─────────────┐
            │     END     │
            └─────────────┘
```

# FIG. 8

# DETERMINATION OF WHETHER OR NOT TO STOP OUTDOOR AIR COOLING OPERATION
## (FOURTH PROCEDURE)

```
                    ┌─────────────┐
                    │    START    │
                    └─────────────┘
                           │
        ┌──────────────────┼
        │         ┌─────────▼─────────┐
        │         │ ACQUIRE OUTDOOR   │  ～S31
        │         │  AIR TEMPERATURE To│
        │         └─────────┬─────────┘
        │                   │
        │         ┌─────────▼─────────┐
        │         │ ACQUIRE INDOOR    │  ～S32
        │         │ AIR SET           │
        │         │ TEMPERATURE Tim   │
        │         └─────────┬─────────┘
        │                   │           S33
        │  NO      ◇────────▼────────◇
        └──────────   To > Tim − α4?
                   ◇─────────────────◇
                           │ YES
        ┌──────────────────▼──────────────────┐
        │ STOP OUTDOOR AIR COOLING OPERATION   │
        │ ( UTILIZATION EXPANSION VALVE:      )│ ～S34
        │ ( OPENING DEGREE ADJUSTED,          )│
        │ ( BYPASS AIR FLOW PATH: CLOSED      )│
        └──────────────────┬──────────────────┘
                    ┌───────▼─────┐
                    │     END     │
                    └─────────────┘
```

# FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006308280 A
- EP 3093568 A1
- JP 2009109090 A